# EUROPEAN PATENT APPLICATION

(11) **EP 4 591 772 A1**
(43) Date of publication of application: **30.07.2025**
(21) Application number: 23868350.2
(22) Date of filing: 21.07.2023
(51) Int. Cl.: A47L 9/28, G05D 1/20

(54) **MOBILE ROBOT SYSTEM COMPRISING HETEROGENEOUS CHARGING STATIONS, AND METHOD FOR CONTROLLING MOBILE ROBOT**

(30) Priority: 23.09.2022 KR 20220120848
(71) Applicant: LG Electronics Inc., Yeongdeungpo-gu Seoul 07336 (KR)
(72) Inventor: HAN, Jinwoo, Seoul 08592 (KR); YI, Sangkyu, Seoul 08592 (KR)
(74) Representative: Ter Meer Steinmeister & Partner
(86) International application number: PCT/KR2023/010541
(87) International publication number: WO 2024/063290

(57) **Abstract**

An embodiment of the present invention provides a robot vacuum cleaner system characterized by comprising: one or more heterogeneous docking stations which can be arranged within a travel area and are assigned different docking signals according to the type; and a robot cleaner that receives the docking signals from the one or more heterogeneous docking stations and attempts docking, wherein the robot cleaner includes: a driving unit that moves a main body; a battery supplying power to the driving unit; and a sensor unit that receives the docking signal from the one or more docking stations for charging the battery, and when docking is necessary, the robot cleaner docks onto a docking station by determining the type of the docking station from the docking signals sensed by the sensor unit and determining a docking mode according to the type of the docking station. Therefore, when the heterogeneous docking stations are arranged in a single space, the robot cleaner can recognize a specific docking station and perform a docking operation for docking thereon to prevent a docking error. **In** addition, when the plurality of heterogeneous docking stations are arranged in a single space, the plurality of heterogeneous docking stations transmit different docking signals, and the robot charger can read the corresponding docking signals and travel to a specific docking station to reduce travel loss.

## Description

### TECHNICAL FIELD

The present disclosure relates to a mobile robot, specifically, a mobile robot system including a plurality of heterogeneous charging stations that may be docked to a robot cleaner and a control method thereof, and more particularly, to a variety of heterogeneous charging stations that may be used for a robot cleaner and a control technology therefor.

### BACKGROUND ART

The robot application field has continued to expand and medical robots, aerospace robots, etc. have been developed, and household robots that may be used in general households have also been produced. Among these robots, robots that may drive on their own are referred to as mobile robots.

A representative example of a mobile robot used in a household is a robot cleaner.

Various technologies have been known for detecting the environment and users around robot cleaners through various sensors provided in the robot cleaners. In addition, technologies have been known for robot cleaners learning and mapping a cleaning area on its own and identifying a current location thereof on a map. Robot cleaners that clean a cleaning area in a preset manner, while driving, have been known.

In addition, in the related art, a technology in which a robot cleaner drives on its own in an area to be cleaned and performs a zigzag pattern driving along a wall, while driving on the periphery of the area, has been disclosed.

Meanwhile, robot cleaners need to charge their batteries in order to continuously perform autonomous driving. In particular, robot cleaners with autonomous driving characteristics have to have automatic charging or autonomous charging characteristics.

To this end, Korean Application Publication No. 10-2018-0079054 discloses a docking technology that may accurately dock an autonomous robot cleaner to a charging station.

The robot cleaner is charged after a charging terminal of the robot cleaner and a charging terminal of the charging station come into contact with each other, and this process is called docking.

A technology for such precise docking is also required, and if docking does not occur, the problem occurs that the robot cleaner does not drive and clean according to a schedule.

In addition to the docking technology, there are various technologies required between the charging station and the robot cleaner.

In particular, Korean Patent No. 10-2329614 discloses a method of sharing and using a single charging station when multiple robot cleaners attempt to drive in a space.

However, when various charging stations are arranged in a space, Korean Patent No. 10-2329614 has a problem in that it is impossible to distinguish between charging stations because docking is performed upon receiving a signal transmitted from one charging station.

### [Related art document][Patent document]

(Patent document 1) Korean Application Publication No. 10-2018-0079054 (publication date: July 10, 2018)
(Patent document 2) Korean patent No. 10-2329614

### DETAILED DESCRIPTION OF INVENTION

### TECHNICAL PROBLEMS

A first aspect of the present disclosure is to provide a method for docking a robot cleaner in a space in which heterogeneous docking stations are arranged.

A second aspect of the present disclosure is to provide a control method in which multiple heterogeneous docking stations transmit different docking signals and a robot charger reads the corresponding docking signals to be able to drive to a specific docking station.

A third aspect of the present disclosure is to provide a control method of filtering out noise in a docking signal received by a robot cleaner, thereby performing normal determination of a docking signal only for a specific signal.

### TECHNICAL SOLUTION

In an aspect, a robot cleaner includes: a body; a driving part moving the body; a battery supplying power to the driving part; a sensor part receiving a docking signal from at least one docking station for charging the battery; and a controller determining a type of the docking station from the docking signal detected by the sensor part, determining a docking mode according to the type of the docking station, and controlling the driving part to dock to the docking station.

The controller may extract information indicating the type of the docking station from the docking signal when at least one docking station is of a different type.

The controller may include docking station information indicating a type allocated to a plurality of heterogeneous docking stations.

When the docking mode starts, the controller may control the driving part to move toward a docking station for which driving has started.

The controller may move toward the docking station for which driving has started and perform a docking detection operation at a first position to read all of the received docking signals.

The controller may rotate 360 degrees from the first position and reads all of the docking signals when performing the docking detection operation.

When receiving all of the docking signals from at least two heterogeneous docking stations placed within a driving area, the controller may determine whether there is a docking station with a set priority among the docking signals.

The controller may control the driving part to perform docking to the docking station to which the priority is set.

The sensor part may include an infrared sensor receiving the docking signal.

The controller may determine that the docking station is placed when the received docking signal matches all of stored assigned docking station information of the docking station.

In another aspect, a method of controlling a robot cleaner includes: receiving docking station information for heterogeneous docking stations; driving in a driving area from a first docking station of the driving area and performing cleaning; driving toward the first docking station when docking is required; performing docking search at a first location and receiving all docking signals; comparing the docking signals with the docking station information to determine the docking station to dock at; and moving to a determined docking station and performing docking.

When heterogeneous docking stations are placed within the driving area, assigned unique docking signals may be received from the heterogeneous docking stations in the docking search operation.

The docking station information may include information indicating types of multiple heterogeneous the docking stations.

In the docking search operation, the docking signals may be received while rotating 360 degrees at the first position.

The method may further include: when receiving all of the docking signals from at least two heterogeneous docking stations arranged within the driving area, determining whether there is a docking station with a set priority among the docking signals.

The method may further include: when there is a docking station with a set priority, performing docking to the docking station with the set priority.

In the determining of the docking station, when all of the received docking signals match the docking station information, it may be determined that a matched docking station is located.

In another aspect, a robot cleaner system includes: at least one docking station among multiple heterogeneous docking station groups placed within a driving area and have different docking signals assigned according to their types; and a robot cleaner receiving the docking signal from the docking station and attempts to dock, wherein the robot cleaner includes: a body; a driving part moving the body; a battery supplying power to the driving part; and a sensor part receiving a docking signal from at least one docking station for charging the battery, wherein the robot cleaner, when docking is required, determines the type of the docking station from the docking signal detected by the sensor part, determines a docking mode according to the type of the docking station, and dock to the docking station.

Each of the at least one docking station may be assigned a unique docking signal representing its type, and information on the unique docking signal may be shared with the robot cleaner.

The unique docking signal is assigned as a digital signal of a predetermined bit, and if all the digital signals of the predetermined bit match, the robot cleaner may determine that the corresponding type of the docking station is placed.

### EFFECT OF INVENTION

Through the above solution, when heterogeneous docking stations are placed in a space, the robot cleaner may recognize a specific docking station and perform a docking operation therefor, thereby preventing a docking error.

In addition, when multiple heterogeneous docking stations are placed in a space, the multiple heterogeneous docking stations transmit different docking signals and the robot charger reads the corresponding docking signals and drives to a specific docking station, thereby reducing driving loss.

In addition, by filtering out noise in a docking signal received by the robot cleaner, whether a docking signal is normal is determined only for a specific signal, thereby improving docking accuracy.

In this manner, when multiple heterogeneous docking stations are placed in a space through the development of an additional docking station or the purchase of a cleaner, etc., the robot cleaner may recognize a newly introduced docking station and perform docking accordingly, and thus, both the newly introduced docking station and an old docking station may be used.

### BRIEF DESCRIPTION OF THE DRAWING

FIG. 1 is a perspective view illustrating a robot cleaner system including a robot cleaner and heterogeneous docking stations for charging the robot cleaner according to an embodiment of the present disclosure.
FIG. 2 is a top elevation view of the robot cleaner of the embodiment of FIG. 1.
FIG. 3 is a front elevation view of the robot cleaner of the embodiment of FIG. 1.
FIG. 4 is a bottom elevation view of the robot cleaner of the embodiment of FIG. 1.
FIG. 5 is a block diagram illustrating a control relationship between major components of the robot cleaner of the embodiment of FIG. 1.
FIG. 6 is a perspective view of a robot cleaner of another embodiment of FIG. 1.
FIG. 7 is a side elevation view of the robot cleaner of another embodiment of FIG. 6.
FIG. 8 is a perspective view of a first docking station of the mobile robot system of FIG. 1.
FIG. 9 is a block diagram illustrating a control relationship of the first docking station according to an embodiment of the present disclosure.
FIG. 10 is a perspective view of a second docking station of the robot cleaner system of FIG. 1.
FIG. 11 is a side elevation view of the second docking station of FIG. 10.
FIG. 12 is a perspective view of a third docking station of the robot cleaner system of FIG. 1.
FIG. 13 is an internal detailed view illustrating dust movement when the third docking station of

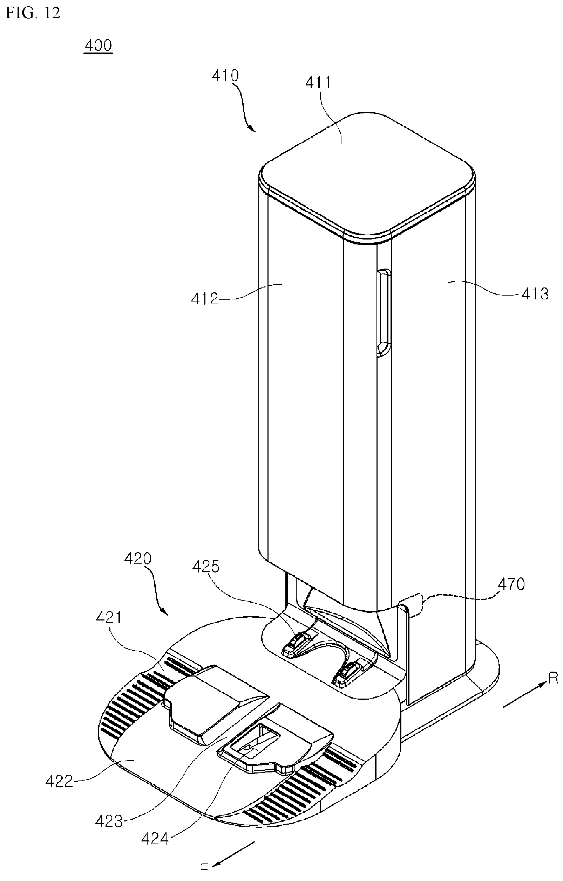

FIG. 12 is coupled to a robot cleaner.

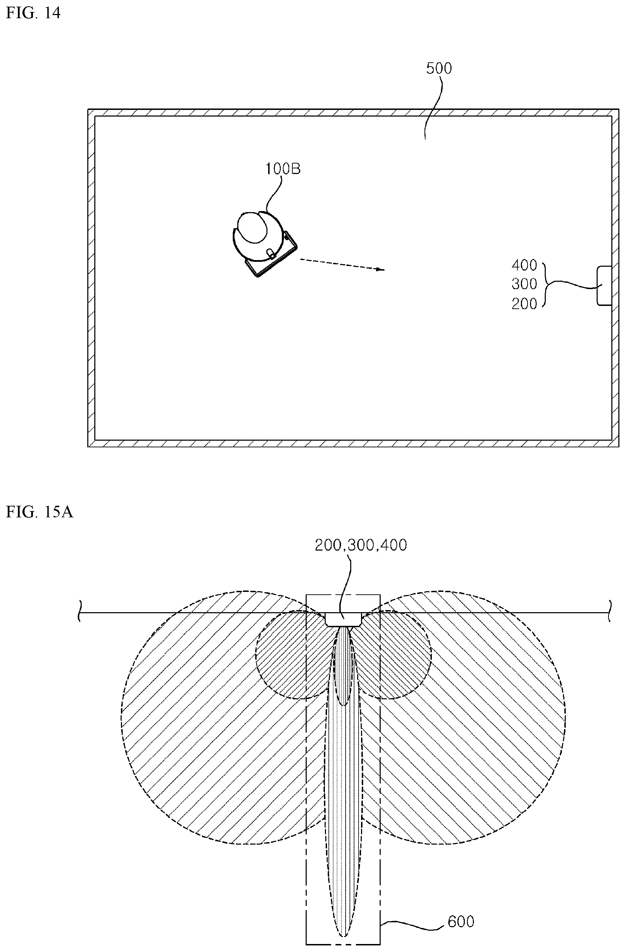

FIG. 14 is a diagram illustrating a docking mode of a robot cleaner and a docking station in one driving area.
FIG. 15A illustrates a signal range of a plurality of docking signals transmitted from a specific docking station.

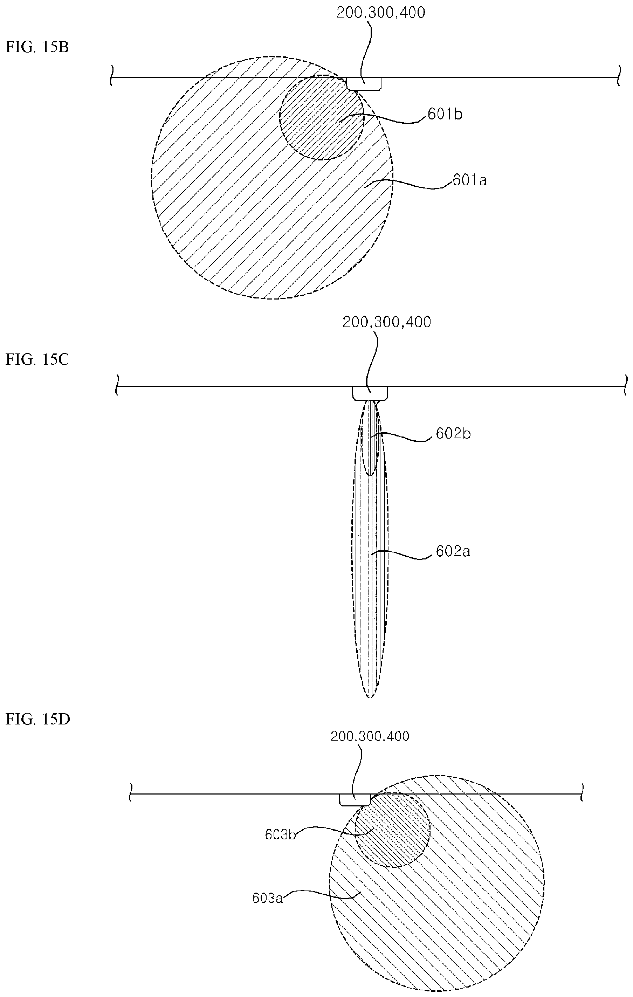

FIG. 15B illustrates a left docking signal range in FIG. 15A.
FIG. 15C illustrates a center docking signal range in FIG. 15A.
FIG. 15D illustrates a right docking signal range in FIG. 15A.

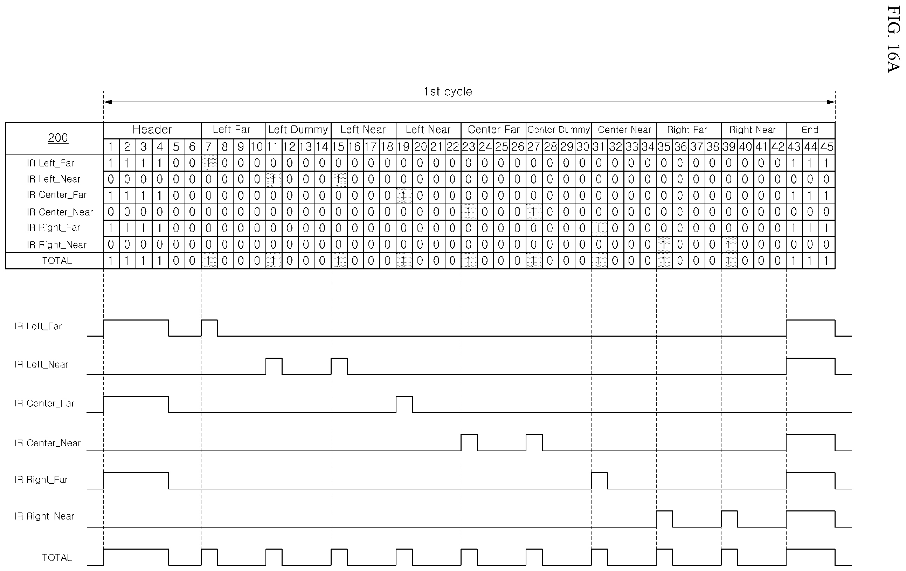

FIG. 16A illustrates a docking signal of a first docking station.

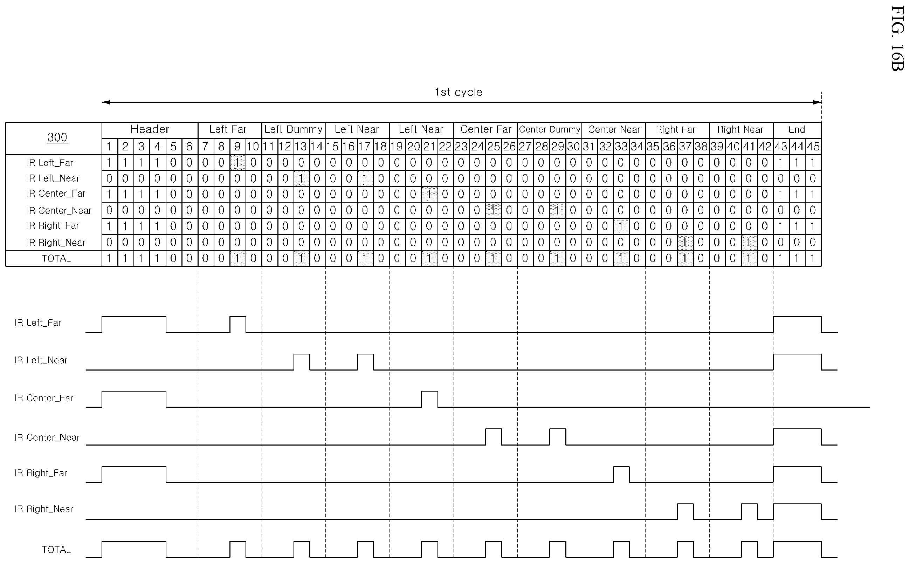

FIG. 16B illustrates a docking signal of a second docking station.

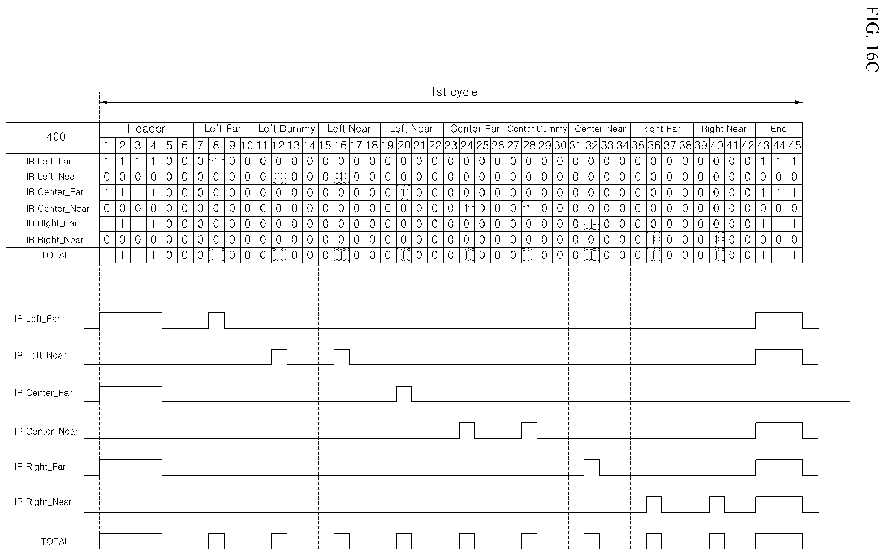

FIG. 16C illustrates a docking signal of a third docking station.

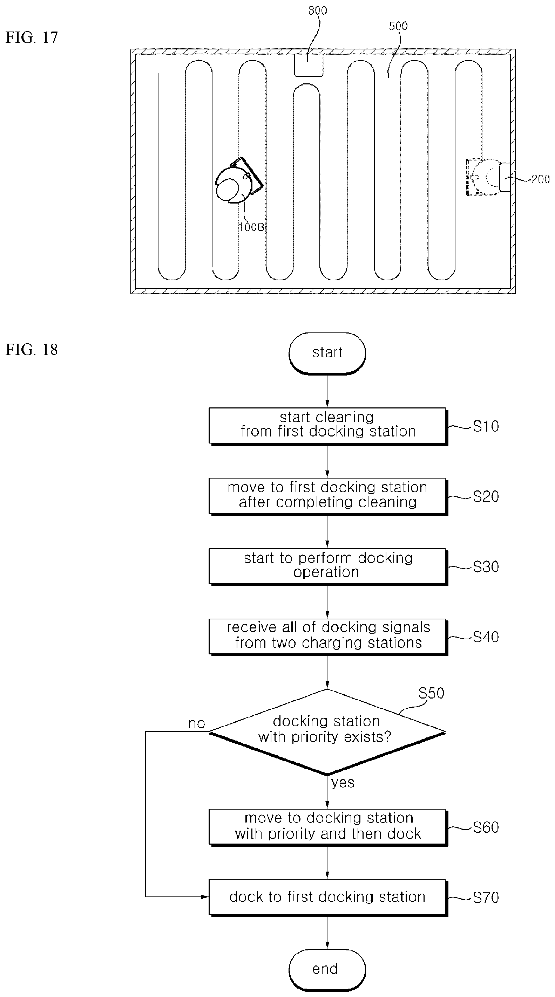

FIG. 17 illustrates a state in which multiple heterogeneous docking stations are arranged in a space.
FIG. 18 is a flowchart illustrating a docking mode of a robot cleaner in FIG. 17.

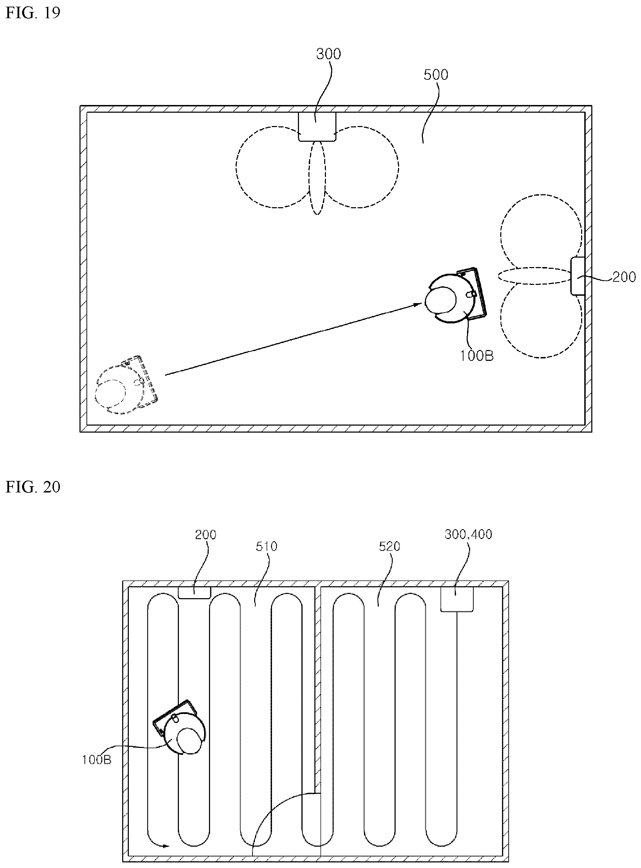

FIG. 19 illustrates the docking search operation of FIG. 18.
FIG. 20 illustrates a state in which multiple heterogeneous docking stations are arranged in two adjacent spaces.

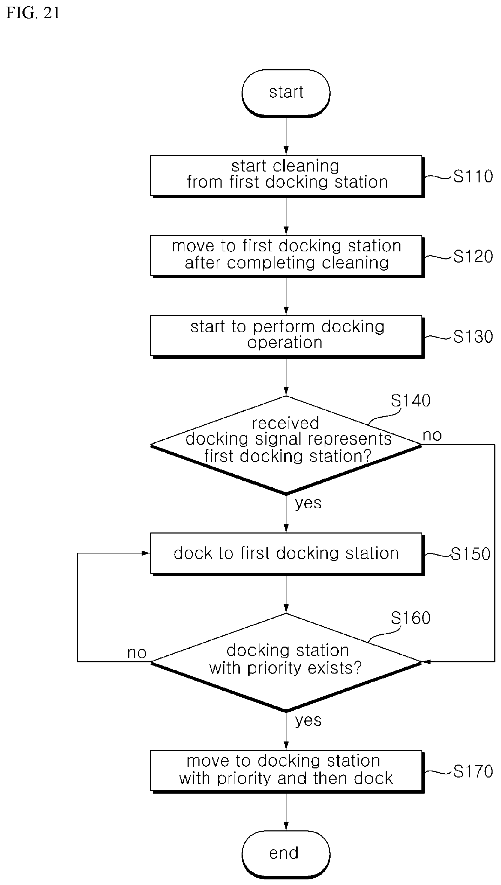

FIG. 21 is a flowchart illustrating a docking mode of the robot cleaner in FIG. 20.

### BEST MODE FOR CARRYING OUT THE INVENTION

In the large and small comparisons expressed linguistically/mathematical throughout this description, 'less than or equal to' and 'less than' are degrees that may be easily substituted with each other from the point of view of a person skilled in the art, and 'greater than or equal to' and 'greater than' are degrees that may be easily substituted with each other from the point of view of a person of a person skilled in the art, and of course, the substitution in the implementation of the present disclosure is not problematic in exhibiting their effects.

A mobile robot of the present disclosure refers to a robot that may move on its own using wheels, etc., and may be a robot cleaner, etc.

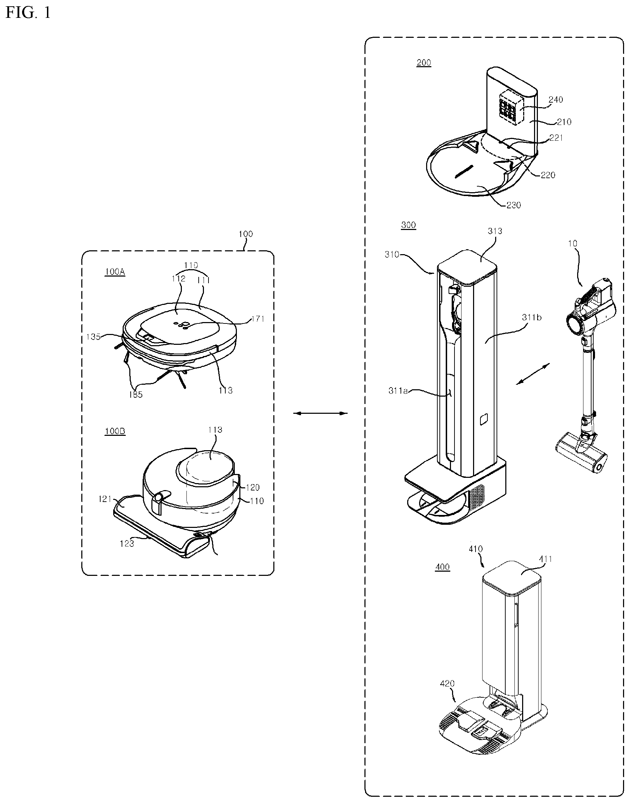

Hereinafter, a robot cleaner will be described as an example among the mobile robots with reference to FIGS. 1 to 5, but is not limited thereto.

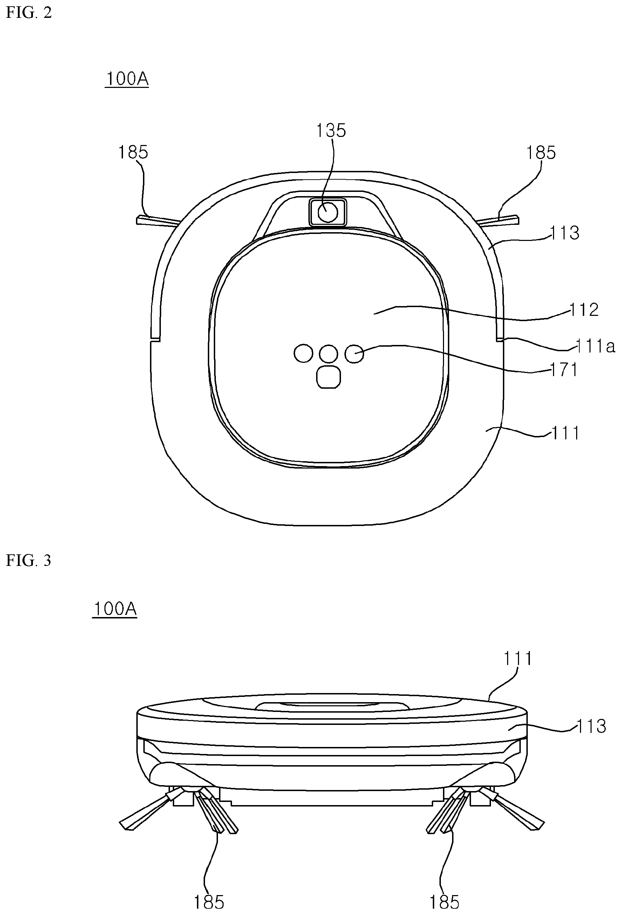

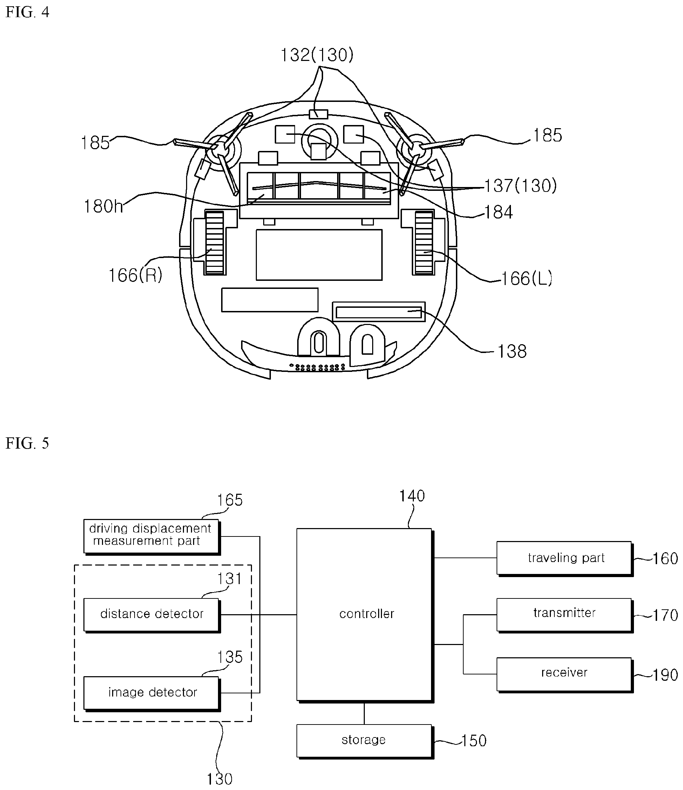

FIG. 1 is a perspective view illustrating a robot cleaner system including a robot cleaner and heterogeneous docking stations for charging the robot cleaner according to an embodiment of the present disclosure, FIG. 2 is a top elevation view of the robot cleaner of the embodiment of FIG. 1, FIG. 3 is a front elevation view of the robot cleaner of the embodiment of FIG. 1, FIG. 4 is a bottom elevation view of the robot cleaner of the embodiment of FIG. 1, and FIG. 5 is a block diagram illustrating a control relationship between major components of the robot cleaner of the embodiment of FIG. 1.

A mobile robot system according to an embodiment of the present disclosure includes at least one mobile robot 100 and at least one docking stations 200, 300, and 400.

That is, multiple heterogeneous docking stations 200, 300, and 400 may be placed within an area identified as a single driving area.

The mobile robot 100 may be a dry cleaning robot cleaner 100 that performs vacuum cleaning as shown in FIG. 1.

In addition, the mobile robot 100 may include other things than a vacuum cleaner and may be a home robot, an entertaining robot, a guide robot, or a home helper robot that provides a service while freely driving in a corresponding driving area.

The mobile robot 100 commonly drive in the corresponding driving area and provide an assigned service, and when power charged in a battery is discharged, the mobile robot 100 may dock to at least one of the docking stations 200, 300, and 400 placed in the corresponding driving area to charge the battery.

At least one stations 200, 300, and 400 may include at least one of a general station 200 for a robot cleaner, a multi-station 300 that may be docked for a combined use with a stick cleaner 10, and a dumping station 400 that is connected to a dust bin of the robot cleaner 100 and may collect dust from the dust bin.

Two cleaners may be simultaneously coupled to the multi-station 300. Here, the cleaners 100 and 10 may include a first cleaner 10 and a second cleaner 100. Meanwhile, the present embodiment may be implemented by excluding some of these components, and additional components are not excluded.

The first cleaner 10 and the second cleaner 100 may be arranged in the multi-station 300. The first cleaner 10 may be coupled to the side of the cleaner station 10. Specifically, the first cleaner 10 may include a body, and the body may be coupled to the side of the multi-station 300. The second cleaner 100 may be docked to a lower portion of the multi-station 300. Here, the first cleaner 10 may be a stick cleaner which performs a cleaning operation manually by a user. Meanwhile, the multi-station 300 may remove dust from a dust bin of the first cleaner 10. The multi-station 300 may remove dust from a dust bin (not shown) of the second cleaner 100. This will be described below.

The general station 200 may be a general charging station distributed together with the robot cleaner 100, and the general station 200 may supply power suitable for a specific robot cleaner 100 that is matched and distributed. This will be described in detail below.

Meanwhile, the dumping station 400 is a docking station for a robot cleaner and includes a docking module in a lower portion thereof and a collecting portion that communicates with the dust bin of the robot cleaner 100 and absorbs and receives dust from the dust bin. This dumping station 400 may be additionally distributed and sold in addition to the general station 200.

In this manner, the mobile robot system according to an embodiment of the present disclosure is limited to having at least two heterogeneous docking stations 200, 300, and 400 arranged within one driving area or having arranged docking stations 300 and 400 other than the general station 200.

That is, in a state in which the general station 200 distributed and sold together with one robot cleaner 100 is installed within the corresponding driving area, when the dumping station 400 or the multi-station 300 is additionally provided, multiple docking stations 200, 300, and 400 may be placed within one driving area.

In addition, the general station 200 that is distributed and sold together with one robot cleaner 100 and installed within the corresponding driving area may be replaced with the upgraded dumping station 400, or the multi-station 300 may be additionally purchased and replaced with the general station 200.

In this manner, a mobile robot system including the robot cleaner 100 that may be used together with the general station 200 distributed together with one robot cleaner 100 or replaced with the general station 200 to be used with the new docking stations 300 and 400 is presented.

Specifically, an applicable robot cleaner 100A of a first embodiment includes a body 110 as shown in FIGS. 2 to 5. Hereinafter, when defining each portion of the body 110, a portion facing the ceiling within the driving area is defined as an upper surface portion (see FIG. 2), a portion facing the floor within the driving area is defined as a bottom surface portion (see FIG. 4), and a portion of the perimeter of the body 110 between the upper surface portion and the lower surface portion is defined as a front surface portion (see FIG. 3). In addition, a portion facing the front surface portion of the body 110 in the opposite direction may be defined as a rear surface portion. The body 110 may include a case 111 that forms a space in which various components constituting the robot cleaner 100A are accommodated.

A buffer portion 113 is formed surrounding the front surface portion forming the perimeter of the body 110. The buffer portion 113 surrounds the entire body 110 and may be formed entirely except for the rear surface portion in contact with the docking station 200. Therefore, a step may be formed on the side surface as a boundary between the front surface portion and the rear surface portion of the case 111.

The body 110 is provided with a rechargeable battery (not shown), and the power terminal (not shown) of the battery may be docked to the docking station 200 connected to a commercial power source, so that the power terminal may be electrically connected through contact with a charging terminal 221 of the docking station 200, so that the battery may be charged.

The robot cleaner 100A includes a sensing part 130 that detects the surrounding situation. The sensing part 130 may detect information outside the robot cleaner 100A. The sensing part 130 detects a user around the robot cleaner 100A. The sensing part 130 may detect objects around the robot cleaner 100A.

The sensing part 130 may detect information on a cleaning area. The sensing part 130 may detect obstacles, such as walls, furniture, and cliffs on a driving surface. The sensing part 130 may detect information on the ceiling. The sensing part 130 may detect objects placed on the driving surface and/or external upper objects. The external upper objects may include the ceiling or the lower side of furniture placed in an upward direction of the robot cleaner 100A. Through the information detected by the sensing part 130, the robot cleaner 100A may map the cleaning area.

The sensing part 130 may detect information on the user around the robot cleaner 100A. The sensing part 130 may detect location information of the user. The location information may include direction information on the robot cleaner 100A. The location information may include distance information between the robot cleaner 100A and the user. The sensing part 130 may detect a direction of the user with respect to the robot cleaner 100A. The sensing part 130 may detect a distance between the user and the robot cleaner 100A.

The location information may be acquired directly by detection by the sensing part 130 or may be processed by the controller 140 to be acquired.

The sensing part 130 may include an image detector 135 that detects an image of the surroundings. The image detector 135 may detect an image in a specific direction with respect to the robot cleaner 100A. For example, the image detector 135 may detect an image in front of the robot cleaner 100A. The image detector 135 images a driving area and may include a digital camera. The digital camera may include an image sensor (e.g., a CMOS image sensor) configured to include at least one optical lens and a plurality of photodiodes (e.g., pixels) that form an image by light passing through the optical lens and a digital signal processor (DSP) that configures an image based on signals output from the photodiodes. The digital signal processor may generate not only a still image but also a moving image including frames composed of still images.

The sensing part 130 may include a distance detector 131 for detecting a distance to an obstacle located in front of a driving direction. The distance detector 131 may include an ultrasonic sensor, an infrared sensor, etc.

The sensing part 130 may include a cliff detector 132 that detects whether there is a cliff on the floor within the driving area. A plurality of cliff detectors 132 may be provided.

The sensing part 130 may further include a lower image sensor 137 that obtains an image of the floor. The sensing part 130 may further include a submergence detector (not shown) that detects whether the interior of the robot cleaner 100A is submerged.

The robot cleaner 100A includes a traveling part 160 that moves the body 110. The traveling part 160 moves the body 110 relative to the floor. The traveling part 160 may include at least one driving wheel 166 that moves the body 110. The traveling part 160 may include a driving motor. The driving wheels 166 may be provided on the left and right sides of the body 110, and are hereinafter, referred to as a left wheel 166(L) and a right wheel 166(R), respectively.

The left wheel 166(L) and right wheel 166(R) may be driven by a single driving motor, but a left wheel driving motor that drives the left wheel 166(L) and a right wheel driving motor that drives the right wheel 166(R) may be provided, respectively, as needed. A driving direction of the body 110 may be changed to the left or right by differentiating rotation speeds of the left wheel 166(L) and the right wheel 166(R).

The robot cleaner 100A includes a cleaning part 180 that performs a cleaning function.

The robot cleaner 100A may clean the floor with the cleaning part 180, while moving in a cleaning area. The cleaning part 180 may include a suction device that sucks in foreign substances, a brush 185 that performs a sweeping, a dust bin (not shown) that stores foreign substances collected by the suction device or the brush, and/or a mop part (not shown) that performs mopping.

A suction port 180h through which air is sucked may be formed on the bottom surface of the body 110. A suction device (not shown) that provides suction force so that air may be sucked in through the suction port 180h and a dust bin (not shown) that collects dust sucked in together with air through the suction port 180h may be provided within the body 110.

An opening for inserting and removing the dust bin may be formed in the case 111, and a dust bin cover 112 that opens and closes the opening may be provided to be rotatable relative to the case 111.

A roll-shaped main brush 184 having brushes exposed through the suction port 180h and an auxiliary brush 185 located on the front side of a lower surface of the body 110 and having a brush including a plurality of radially extended blades may be provided. By the rotation of these brushes 184 and 185, dust is removed from the floor within the driving area, and the dust separated from the floor is sucked in through the suction port 180h and collected in the dust bin.

The battery 138 may supply power necessary for the overall operation of the robot cleaner 100A as well as the driving motor. When the battery 138 is discharged, the robot cleaner 100A may drive back to the docking stations 200, 300, and 400 for charging, and during the return driving, the robot cleaner 100A may detect the locations of the docking stations 200, 300, and 400 by itself.

Meanwhile, the image detector 135 is provided on the upper surface portion of the body 110 to obtain an image of the ceiling within the cleaning area, but the location and imaging range of the image detector 135 are not necessarily limited thereto. For example, the image detector 135 may be provided to acquire an image in front of the body 110.

Referring to FIG. 5, the robot cleaner 100A includes a storage 150 that stores various data. Various data required for controlling the robot cleaner 100A may be recorded in the storage 150. The storage 150 may include a volatile or nonvolatile recording medium. The recording medium stores data that may be read by a microprocessor and may include hard disk drive (HDD), solid state disk (SSD), silicon disk drive (SDD), ROM, RAM, CD-ROM, a magnetic tape, a floppy disk, an optical data storage device, etc.

A map of the cleaning area may be stored in the storage 150. The map may be input by an external terminal capable of exchanging information with the robot cleaner 100A through wired or wireless communication or may be generated by the robot cleaner 100A through self-learning. In the former case, examples of external terminals may include a remote controller, PDA, laptop, smartphone, tablet, etc. equipped with an application for setting the map.

The driving displacement measurement part 165 may measure a driving displacement based on the image acquired from the image detector 135. The driving displacement is a concept that includes a moving direction and a moving distance of the robot cleaner 100A. For example, the driving displacement measurement part 165 may measure the driving displacement by comparing the continuous pixels of the floor image that change according to a continuous movement of the robot cleaner 100A.

In addition, the driving displacement measurement part 165 may measure the driving displacement of the robot cleaner 100A based on an operation of the traveling part 160. For example, the controller 140 may measure a current or past moving speed of the robot cleaner 100A, a distance over which the robot cleaner 100A has driven, etc. based on a rotation speed of the driving wheel 136 and may also measure a current or past direction change process according to the rotation direction of respective driving wheels 136(L) and 136(R).

The driving displacement measurement part 165 may also measure the driving displacement using at least one of the distance detector 131 and the image detector 135.

The controller 140 may recognize the location of the robot cleaner 100A on the map based on the thusly measured driving displacement measured.

A transmitter 170 may transmit information on the robot cleaner to another robot cleaner or a central server. A receiver 190 may receive information from another robot cleaner or a central server. The information transmitted by the transmitter 170 or the information received by the receiver 190 may include configuration information of the robot cleaner.

The controller 140 processes and determines various information. The controller 140 may perform information processing to learn the cleaning area. The controller 140 may perform information processing to recognize the current location on the map. The controller 140 may control the overall operation of the robot cleaner 100A by controlling various components that constitute the robot cleaner 100A (for example, the sensing part 130 including the driving displacement measurement part 165, the distance sensing part 131, and the image sensing part 135, the traveling part 160, the transmitter 170, the receiver 190, etc.).

The control method according to the present embodiment may be performed by the controller 140. The present disclosure may be a control method for the robot cleaner 100A and may also be the robot cleaner 100A including the controller 140 that performs the control method. The present disclosure may be a computer program including each operation of the control method and may also be a recording medium on which a program for implementing the control method by a computer is recorded. The 'recording medium' refers to a computer-readable recording medium. The present disclosure may be a mobile robot control system including both hardware and software.

The controller 140 of the robot cleaner 100A processes and determines various information, such as mapping and/or recognizing the current location. The controller 140 may be provided to map the cleaning area through the image and learning and recognize the current location on the map. That is, the controller 140 may perform a SLAM (simultaneous localization and mapping) function.

The controller 140 may control the driving of the traveling part 160. The controller 140 may control the operation of the cleaning part 180.

The actual cleaning area may correspond to the cleaning area on the map. The cleaning area may be defined as the range of all areas on the plane in which the robot cleaner 100A has driven and the area on the plane in which the robot cleaner 100A is currently driving.

The controller 140 may also determine the movement flow path of the robot cleaner 100A based on the operation of the traveling part 160. For example, the controller 140 may determine the current or past moving speed of the robot cleaner 100A, a distance over which the robot cleaner 100A has driven, etc. based on the rotation speed of the driving wheel 166 and may also determine the current or past direction change process based on the rotation direction of the respective driving wheels 166(L) and 166(R). Based on the driving information of the robot cleaner 100A determined in this manner, the location of the robot cleaner 100A on the map may be updated. In addition, the location of the robot cleaner 100A on the map may be updated using the image information.

Specifically, the controller 140 controls the driving of the robot cleaner 100A and controls the operation of the traveling part 160 according to a set driving mode. As the driving mode of the traveling part 160, a zigzag mode, an edge mode, a spiral mode, or a composite mode may be selectively set.

The zigzag mode is defined as a mode in which the robot performs cleaning while driving in a zigzag manner while being separated from a wall or an obstacle by a predetermined distance or more. The edge mode is defined as a mode in which the robot performs cleaning while driving in a zigzag manner along a wall. The spiral mode is defined as a mode in which the robot performs cleaning in a spiral manner within a certain area based on one place in the air.

Meanwhile, the controller 140 generates a map of the cleaning area. That is, the controller 140 may form a map of the cleaning area using a location recognized through preceding cleaning and an image acquired from each spot. The controller 140 matches images acquired from each spot to each node on the map. The acquired images may correspond to the nodes, respectively.

The controller 140 may recognize the location of an obstacle and the current location of the robot cleaner 100A by using at least one of the image detectors 135 in the sensing part 130 and may recognize the corresponding location on the map.

The controller 140 may detect remaining power of the battery 138, and if the remaining power is insufficient, the controller 140 may control the movement to the docking stations 200, 300, and 400 connected to an external commercial power source, so that the battery 138 may receive charging current from the docking station 200 and charged.

An input part 171 may receive ON/OFF or various commands. The input part 171 may include buttons, keys, or a touch-type display. The input part 171 may include a microphone for voice recognition.

An output part (not shown) may inform the user of various information. The output part may include a speaker and/or a display.

Meanwhile, the mobile robot system of the present disclosure may include a robot cleaner 100B of another embodiment as a mobile robot 100B within the driving area.

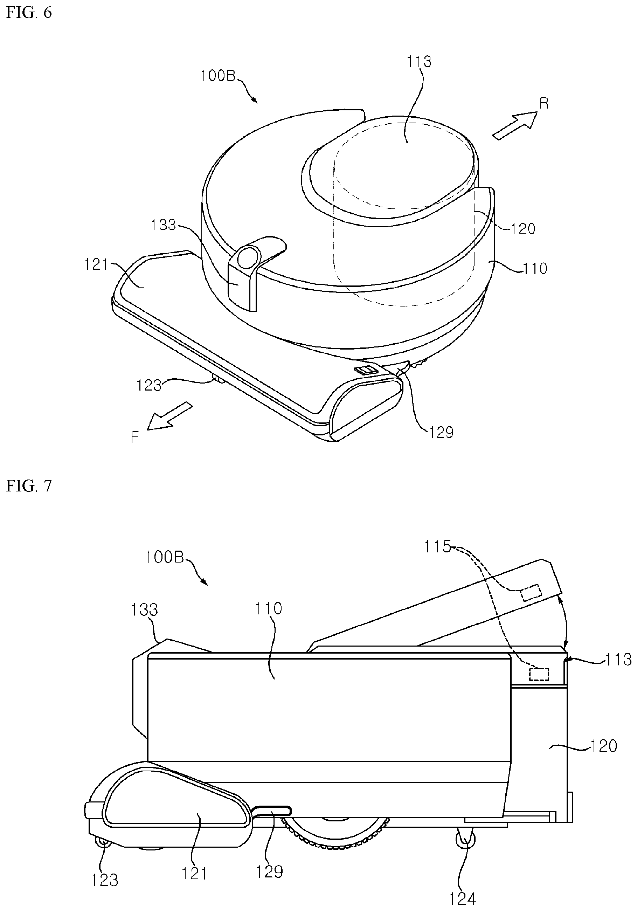

Hereinafter, a configuration of the robot cleaner 100B of another embodiment will be described with reference to FIGS. 6 and 7.

FIG. 6 is a perspective view of the robot cleaner of another embodiment of FIG. 1, and FIG. 7 is a side elevation view of the robot cleaner of another embodiment of FIG. 6.

The robot cleaner 100B according to another embodiment of the present disclosure removes foreign substances on the floor while driving within an area.

The robot cleaner 100B includes a cleaner body 110, a suction unit 121, a sensing unit 133, and a dust bin 120.

The cleaner body 110 is provided with a controller (not shown) for controlling the robot cleaner 100B and a wheel unit 111 for driving the robot cleaner 100B. The robot cleaner 100B may be moved in every direction or rotated by the wheel unit.

The wheel unit 111 includes a main wheel and a sub-wheel.

The main wheels are provided on both sides of the cleaner body 110 and configured to be rotatable in one direction or the other according to a control signal from the controller. Each main wheel may be configured to be driven independently of each other. For example, each main wheel may be driven by a different motor.

The sub-wheel supports the cleaner body 110 together with the main wheel and is configured to assist the driving of the robot cleaner 100B by the main wheel.

The controller controls the driving of the wheel unit, so that the robot cleaner 100B autonomously drives on the floor.

Meanwhile, the cleaner body 110 is equipped with a battery (not shown) that supplies power to the robot cleaner 100B. The battery is configured to be rechargeable and may be detachably installed on the bottom of the cleaner body 110.

The suction unit 121 is disposed to protrude from one side of the cleaner body 110 to suck in air including dust. The one side may be the side in which the cleaner body 110 drives in the forward direction F, i.e., the front of the cleaner body 110.

In this drawing, the suction unit 121 has a form in which it protrudes forward and left and right sides from one side of the cleaner body 110.

A front end of the suction unit 121 is disposed in a position spaced forward from one side of the cleaner body 110, and the left and right ends of the suction unit 121 are arranged in positions spaced left and right from one side of the cleaner body 110.

Since the cleaner body 110 is formed in a circular shape and both sides of the rear end of the suction unit 121 are formed to protrude from the cleaner body 110 to the left and right sides, an empty space, i.e., a gap, may be formed between the cleaner body 110 and the suction unit 121.

The empty space is a space between the left and right ends of the cleaner body 110 and the left and right ends of the suction unit 121 and has a recessed shape toward the inside of the robot cleaner 100B.

If an obstacle is caught in the empty space, the robot cleaner 100B may be caught by the obstacle and is unable to move. To prevent this, a cover member 129 may be disposed to cover at least a portion of the empty space. The cover member 129 may be provided on the cleaner body 110 or the suction unit 121. For example, the cover members 129 are formed to protrude from both sides of the rear end of the suction unit 121 to cover an outer circumferential surface of the cleaner body 110.

The cover member 129 is disposed to fill at least a portion of the empty space, that is, the empty space between the cleaner body 110 and the suction unit 121. Accordingly, an obstacle may be prevented from being caught in the empty space or a structure may be implemented in which an obstacle may be easily removed from the obstacle even if it is caught in the empty space.

The cover member 129 protruding from the suction unit 121 may be supported on the outer circumferential surface of the cleaner body 110. When the cover member 129 protrudes from the cleaner body 110, the cover member 129 may be supported on the rear surface portion of the suction unit 121. According to the structure, when the suction unit 121 collides with an obstacle and receives an impact, a portion of the impact may be transmitted to the cleaner body 110 so that the impact may be dispersed.

The suction unit 121 may be detachably coupled to the cleaner body 110. When the suction unit 121 is separated from the cleaner body 110, a mop module (not shown) may be detachably coupled to the cleaner body 110 to replace the separated suction unit 121. Accordingly, when the user wants to remove dust from the floor, the user may mount the suction unit 121 on the cleaner body 110, and when the user wants to wipe the floor, the user may mount the mop module on the cleaner body 110.

The sensing unit 133 is disposed in the cleaner body 110. As illustrated, the sensing unit 133 may be placed on one side of the cleaner body 110 in which the suction unit 121 is located, i.e., on the front side of the cleaner body 110.

The sensing unit 133 may be placed to overlap the suction unit 121 in a vertical direction of the cleaner body 110. The sensing unit 133 is placed above the suction unit 121 to detect obstacles or terrain features ahead so that the suction unit 121 located at the frontmost portion of the robot cleaner 100B does not collide with the obstacle.

The sensing unit 133 is configured to additionally perform other sensing functions in addition to the detection function.

The cleaner body 110 is provided with a dust bin accommodating portion 113, and the dust bin 120 that separates and collects dust in the suctioned air is detachably connected to the dust bin accommodating portion 113. As illustrated, the dust bin accommodating portion 113 may be formed on the other side of the cleaner body 110, i.e., the rear of the cleaner body 110.

A portion of the dust bin 120 may be accommodated in the dust bin accommodating portion 113, while another portion of the dust bin 120 may be formed to protrude toward the rear of the cleaner body 110 [i.e., the reverse direction R opposite to the forward direction F].

The dust bin 120 is formed with an inlet through which air including dust is introduced and an outlet through which air separated from dust is discharged, and when the dust bin 120 is mounted on the dust bin accommodating portion 113, the inlet and outlet are configured to communicate with a first opening and a second opening formed on an inner wall of the dust bin accommodating portion 113, respectively.

An intake flow path inside the cleaner body 110 corresponds to a flow path from an inflow port (not shown) to the first opening, and an exhaust flow path corresponds to a flow path from the second opening to an exhaust port.

According to this connection relationship, air including dust introduced through the suction unit 121 passes through the intake flow path inside the cleaner body 110 and flows into the dust bin 120, and while passing through a filter or cyclone of the dust bin 120, the air and dust are separated from each other. The dust is collected in the dust bin 120, and the air is discharged from the dust bin 120, passes through the exhaust flow path inside the cleaner body 110, and is finally discharged to the outside through the exhaust port.

The robot cleaner 100B of another embodiment may include the control relationship of FIG. 5.

Meanwhile, the robot cleaner 100A of one embodiment of FIG. 2 and the robot cleaner 100B according to another embodiment of FIG. 6 may receive docking signals generated by the docking stations 200, 300, and 400 using a docking signal detection sensor in the sensor unit 130 or the sensing unit 133 to determine the type, location, and direction of the docking stations 200, 300, and 400.

Here, the docking stations 200, 300, and 400 may transmit docking signals indicating a direction and distance so that the robot cleaner 100A and 200B may return. That is, the mobile robots 100A and 100B may receive signals transmitted from the docking stations 200, 300, and 400, determine the current location, set a moving direction, and return to the docking stations 200, 300, and 400.

The mobile robot system of FIG. 1 includes at least two or more heterogeneous docking stations 200, 300, and 400 that may be placed within one driving area.

Here, as the docking stations 200, 300, and 400, the general station 200, a multi-station 300, or a dumping station 400 may be applied as described above.

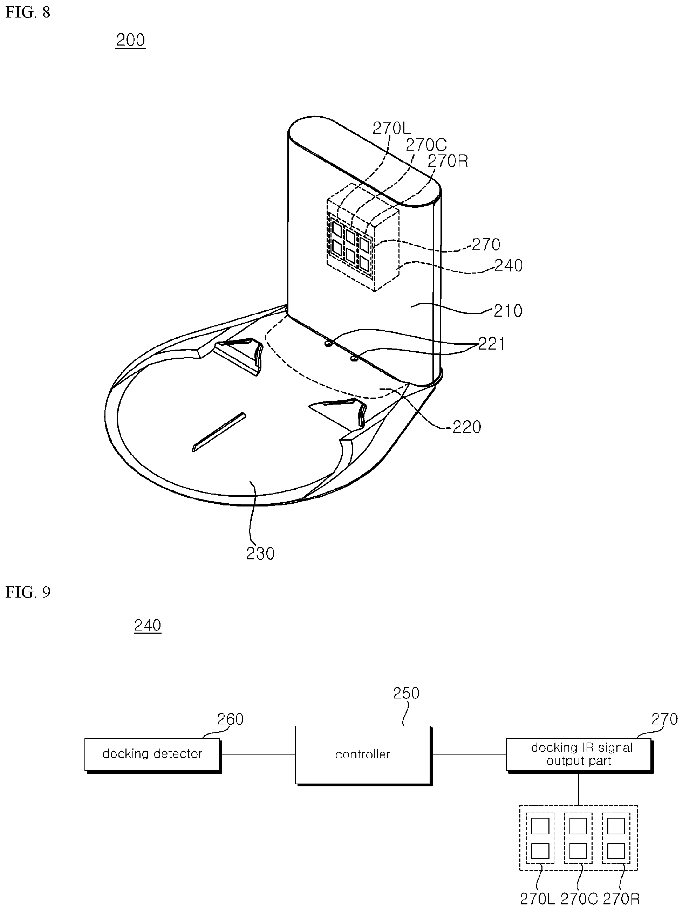

The general station 200 may have a structure as shown in FIGS. 8 and 9.

FIG. 8 is a perspective view of a first docking station of the mobile robot system of FIG. 1, and FIG. 9 is a block diagram illustrating a control relationship of the first docking station according to an embodiment of the present disclosure.

Referring to FIG. 8, the general station 200 as the first docking station is implemented with a support plate 230 and a body 210.

The support plate 230 is physically coupled to the docking station body 210 and guides the robot cleaners 100A and 100B to be charged in the general station 200.

That is, the support plate 230 may include a caster guide to guide a caster provided at a front lower end of the robot cleaners 100A and 100B. The support plate 230 guides the robot cleaners 100A and 100B toward the body 210 through the caster guide and guides the charging terminal 221 and a power terminal to vertically overlap and contact each other.

The body 210 of the docking station 200 is provided with a power module 240 for supplying power suitable for the robot cleaners 100A and 100B existing in one driving area and may include a plate 220 coupled to a lower portion of the body 210. The robot cleaners 100A and 100B or a support plate 230 may be coupled to the upper portion of the plate 220 and may be integrated with the support plate 230.

The body 210 may have the power module 240 therein. The power module 240 is electrically connected to an external power source and may receive external electricity. The power module 240 may be electrically connected to the charging terminal 221 and may supply the received electricity to the power terminal of the robot cleaners 100A and 100B.

The power module 240 may function as a control module for controlling the docking station 200.

The body 210 of the docking station 200 may be coupled to a front end of the plate 220 and may protrude upward to form a wall. In this case, The body 210 may function as a wall to prevent escape of the robot cleaners 100A and 100B when the robot cleaners 100A and 100B move away from the support plate 230 on the plate 220 and move forward further. The plate 220 may have a square or curved shape, but is not limited thereto. The plate 220 may be provided with the charging terminal 221 for physically contacting the power terminal of the robot cleaners 100A and 100B and receiving power.

The charging terminal 221 may include a separate charging terminal 221 at a boundary between the plate 220 and the body 210 of the docking station 200.

The support plate 230 may have a circular shape. The shape of the support plate 230 is not limited thereto and includes simple changes, such as a polygonal shape, based on a person skilled in the art. The robot cleaners 100A and 100B are docked to the top of the support plate 230. Referring to FIG. 8, the robot cleaners 100A and 100B are docked to a circular flat surface.

The support plate 230 may include an inclined surface at the rear. The robot cleaners 100A and 100B may climb the inclined surface and face upward. The inclined surface may be formed around the rear edge of the support plate 230.

The charging terminal 221, as a device that is electrically connected to the robot cleaners 100A and 100B and charges a battery placed inside the robot cleaners 100A and 100B, protrudes forward from an upper portion of the plate 220 of the body 210 and is electrically connected to the power module 240 of the body 210. The charging terminal 221 may be disposed in front of the plate 220. The charging terminal 221 may be arranged in a pair on the left and right with respect to a vertical center axis.

Referring to FIG. 9, the power module 240 of the general station 200 according to an embodiment of the present disclosure may be modularized, but is not limited thereto.

The general station 200 may include a controller 250 therein. The controller 250 may control the operation of each module of the docking station 200. The controller 250 may receive signals from a plurality of sensor units including a docking detector 260 and control the signals.

Referring to FIG. 9, the controller 250 of the general station 200 may periodically command the docking signal output part 270 to output a docking signal, and at the same time, may receive a detection signal on whether the robot cleaners 100A and 100B are docked from the docking detector 260.

The docking signal output part 270 of the general station 200 includes output terminals 270L, 270C, and 270R for outputting a plurality of docking signals forward, as shown in FIG. 8.

The output terminals 270L, 270C, and 270R may include a plurality of output terminals 270L, 270C, and 270R arranged in a controlled angle state according to the allocated positions.

The plurality of output terminals 270L, 270C, and 270R may be implemented as infrared output elements that output six different infrared signals when the docking signal is an infrared signal, and physically, two elements may be arranged as a pair.

For example, as shown in FIG. 8, the plurality of output terminals 270L, 270C, and 270R may be implemented as a right output terminal 270R for generating a signal to the right from the front of the general station 200, a center output terminal 270C for generating a signal to the center, and a left output terminal 270L for generating a signal to the left.

The docking signal output part 270 will be described in detail below.

Meanwhile, the charging station of the mobile robot system of FIG. 1 may be implemented as a multi-station.

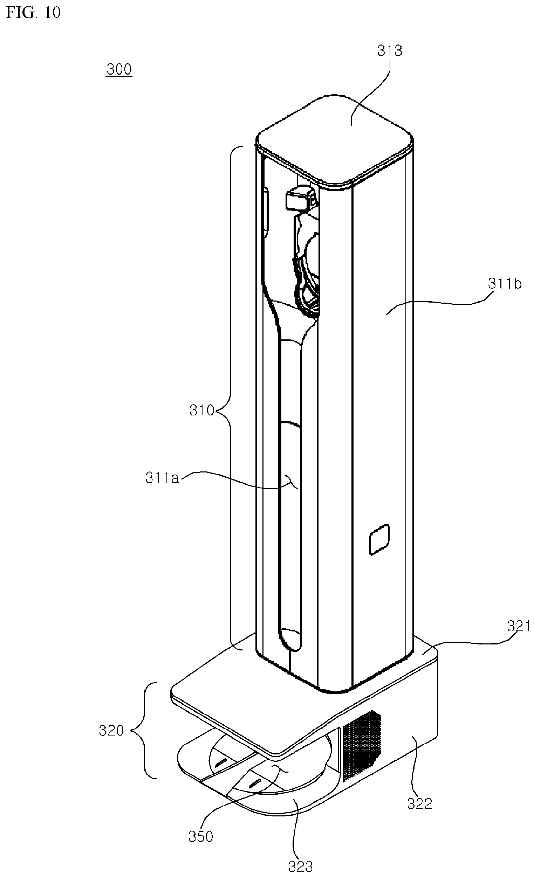

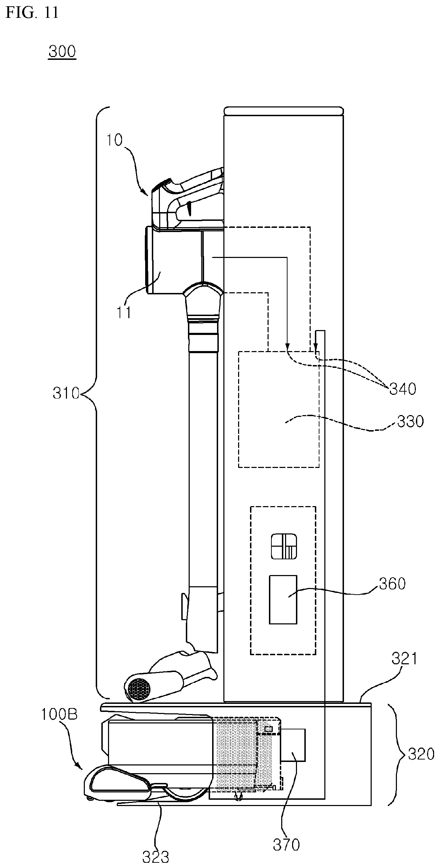

FIG. 10 is a perspective view of a second docking station of the robot cleaner system of FIG. 1, and FIG. 11 is a side elevation view of the second docking station of FIG. 10.

Referring to FIGS. 10 and 11, the multi-station 300 as the second docking station may include a first housing 310 and a second housing 320 that is positioned at the bottom of the first housing 310 to support the first housing 310. The first housing 310 may be configured such that the stick cleaner 10, which is a first cleaner, is coupled to one side and may form a main exterior of the multi-station 300. Specifically, the first housing 310 may be formed in a pillar shape including at least one outer wall surface. As an example, the first housing 310 may be formed in a square pillar shape. In this case, the square pillar shape may include a case in which a curved surface is formed at each corner of the square pillar with a predetermined curvature.

The first housing 310 has a space formed therein to accommodate various components, such as a dust collecting motor, and may collect dust from a dust bin (not shown) of the stick cleaner 10 therein.

The first housing 310 may include a boundary support portion 321. Here, the boundary support portion 321 may be disposed to face the ground. A bottom surface of the boundary support portion 321 in contact with the ground may be disposed parallel to the ground and may also be disposed at a predetermined angle with the ground. With this configuration, the dust collecting motor accommodated inside the first housing 310 may be stably supported, and even when the stick cleaner 10 is combined, there is an advantage in that the overall weight may be balanced.

In addition, the boundary support portion 321 may be a plate shape extending from the bottom surface of the first housing 310 to increase the area in order to prevent the multi-station 300 from falling over and maintain balance.

The first housing 310 may be configured to include at least one outer wall surface as described above. For example, the first housing 310 may include a first outer wall surface, which is a surface on which a coupling portion 311a is formed, and may further include three wall surfaces arranged in a counterclockwise order while facing the first outer wall surface.

The first housing 310 may be provided to be openable. For example, a wall surface adjacent to a portion of the right or left side of a first outer wall surface when the multi-station 300 is viewed from the front may be opened together integrally.

The coupling portion 311a formed on the first outer wall surface may be provided such that the first outer wall surface is sunken toward the inside of the first housing 310 to correspond to a shape of a portion of the stick cleaner 10 in a direction in which the dust bin is disposed. By this configuration, a portion of the stick cleaner 10 may be coupled to the multi-station 300 and supported by the multi-station 300.

In addition, the second housing 320 is arranged with a lower portion of the first housing 310, that is, the boundary support portion 321, as an upper surface.

The second housing 320 includes an accommodating portion 350 therein and is formed with a structure in which the robot cleaner 100 may dock. For example, the accommodating portion 350 corresponding to the shape of the robot cleaner 100 may be formed on the first outer wall surface so that the robot cleaner 100 may enter the accommodating portion 350 for docking. In addition, a charging floor plate that may be coupled to the lower surface of the robot cleaner 100 may be disposed as a floor support portion 323. The floor support portion 323 may have an area protruding from the lower surface to have an extended area like the upper boundary support portion 321, and accordingly, the area that comes into contact with the floor may be increased, thereby maintaining the balance of the multi-station 300 that is formed to be elongated upward.

The multi-station 300 may further include an upper cover 313.

The upper cover 313 may be coupled to the first housing 310. More specifically, the upper cover 313 may be disposed above the first housing 310 in a major axis direction and may be coupled to the first housing 310.

The first housing 310 may be formed in a form in which the upper portion thereof in the major axis direction is open. That is, the internal space of the first housing 310 and the exterior of the first housing 310 may communicate with each other at the upper portion of the first housing 310 in the major axis direction. The coupling portion 311a may extend to the open upper portion of the first housing 310.

The upper cover 313 may be provided to open and close the open upper portion of the first housing 310. The upper cover 313 may be coupled to the first housing 310 via a hinge for opening and closing the first housing 310. More specifically, the upper cover 313 may be coupled to one side of the open upper portion of the first housing 310 via a hinge and may open and close the first housing 310 by rotating about the hinge as an axis. Here, the hinge may be coupled to an outer wall surface of the first housing 310, which is one surface on which the coupling portion 311a is provided, and the outer wall surface, which is one surface opposite to the outer wall surface. Accordingly, the upper cover 313 may open the first housing 310 by rotating in a direction away from the first outer wall surface in which the coupling portion 311a is provided. Through this configuration, when the user attaches the stick cleaner 10 to the multi-station 300, the user may couple the stick cleaner 10 to the first housing 310 with the upper cover 313 open. **In** addition, when the user detaches the stick cleaner 10 from the multi-station 300, the user may take the stick cleaner 10 out from the first housing 310 with the upper cover 313 open. Therefore, when attaching and detaching the stick cleaner 10, the movement range of the stick cleaner 10 upwardly in the major axis direction of the first housing 310 may be free without restriction. **In** other words, since the stick cleaner 10 may be attached and detached without a component interfering with the upper side of the first housing 310, the convenience of attaching and detaching the stick cleaner 10 may be provided.

The upper cover 313 may also form the upper exterior of the multi-station 300 when combined with the multi-station 300.

Here, the upper surface of the upper cover 113 may be disposed parallel to the ground based on the state of being combined with the multi-station 300 and may also be disposed at a predetermined angle with respect to the ground.

Meanwhile, the coupling portion 311a may be provided on one surface parallel to the major axis of the first housing 310, and the one surface may be provided in a sunken form for the purpose of combining a portion of the stick cleaner 10.

A dust bin 330 and a battery housing may be coupled to the coupling portion 311a. The coupling portion 311a includes a coupling surface that comes into contact with the stick cleaner 10 when the stick cleaner 10 is coupled, and the coupling surface refers to a surface formed to as a groove concavely toward the inside of the multi-station 300 on the outer wall surface of the first housing 310. The coupling surface is formed with a step from the first outer wall surface and may be formed parallel to the major axis of the first housing 310.

The coupling surface may come into contact with the dust bin of the stick cleaner 10 and the bottom surface of the battery housing. Here, the bottom surface of the dust bin may refer to a surface facing the ground when the user uses the stick cleaner 10 or puts it down on the ground.

A dust flow path 340 may be formed on the coupling surface so that air from the outside of the first housing 310 may be introduced into the inside. The dust flow path 340 may be formed in a cylindrical cross-section shape corresponding to the shape of the dust bin of the stick cleaner 10 so that the dust in the dust bin of the stick cleaner 10 may be introduced into a dust collecting part 330.

A portion of the coupling portion 311a is formed in a shape corresponding to an outer surface of the dust bin of the stick cleaner 10 and includes a protrusion that may be coupled to the dust bin when the stick cleaner 10 is introduced, and the protrusions are arranged in two places spaced apart from each other to provide convenience in coupling the stick cleaner 10 and the multi-station 300.

The coupling portion 311a is formed as a sunken groove and is coupled while wrapping around the side of the stick cleaner 10, thereby preventing the stick cleaner 10 from shaking in the left and right directions, and the multi-station 300 may stably accommodate the stick cleaner 10.

The stick cleaner 10 is inserted into the coupling portion 311a by the user for attachment and detachment. That is, in the case of attachment of the stick cleaner 10, the user may move the stick cleaner 10 by lowering it from the upper portion of the first housing 310 in the major axis direction to attach the stick cleaner 10 to the coupling portion 311a.

**In** addition, in the case of detachment of the stick cleaner 10, the user may move the stick cleaner 10 by lifting it toward the upper portion of the first housing 310 in the major axis direction to take it out from the coupling portion 311a.

Meanwhile, as described above, the upper cover 313 may be coupled to the first housing 310 through the hinge, and the upper cover 313 may rotate to open the upper portion of the first housing 310 with the hinge as the axis.

The first housing 310 includes a coupling sensor and detects the stick cleaner 10 and detects whether the battery of the stick cleaner 10 is powered, so that whether the stick cleaner 10 is coupled to the coupling portion 311a may be finally determined.

The first housing 310 further includes a dust collecting motor 360, a dust collecting part 330, and a suction flow path 340 therein.

The multi-station 300 may further include a dust collecting motor 360.

The dust collecting motor 360 is accommodated inside the first housing 310 and may generate suction force to suck dust inside the dust bin of the stick cleaner 10. Accordingly, an airflow from the upper portion of the multi-station 300 to the lower portion may be formed.

The multi-station 300 may further include the dust collecting part 330.

The dust collecting part 330 is accommodated inside the first housing 310 and may be placed above the dust collecting motor 360. Since the dust collecting part 330 is placed above the dust collecting motor 360, when the dust collecting motor 360 generates suction force, dust sucked from the inside of the dust bin of the stick cleaner 10 or the dust bin of the robot cleaner 100 may be collected by the dust collecting part 330.

The dust collecting part 330 may be detachably coupled to the first housing 310. Therefore, when the first housing 310 is opened, the dust collecting part 330 may be separated from the first housing 310 and discarded, and a new dust collecting part 330 may be coupled to the first housing 310. That is, the dust collecting part 330 may be defined as a consumable part.

The dust collecting part 330 may be provided so that the volume increases and dust is received therein when suction force is generated by the dust collecting motor 360. To this end, the dust collecting part 330 may be formed of a material that allows air to pass therethrough but does not allow foreign substances, such as dust, to pass therethrough. For example, the dust collecting part 330 may be formed of a non-woven material and may have a hexahedral shape when the volume increases.

The multi-station 300 may further include a suction flow path 340. The suction flow path 340 may connect the stick cleaner 10 or robot cleaner 100 and the dust collecting part 330.

The suction flow path 140 may include a first flow path, a second flow path, and a flow path switching valve.

The first flow path may connect the dust bin of the stick cleaner 10 and the dust collecting part 330. The first flow path is defined as a space in which air flows so that dust inside the dust bin is collected by the dust collecting part 330 when the dust collecting motor 360 accommodated inside the first housing 310 between the dust bin and the dust collecting part 330 of the stick cleaner 10 generates suction force.

When the dust collecting motor 360 is driven to generate suction force, an airflow from one end of the first flow path to the other end is generated, and air including foreign substances flowing from inside the dust bin of the stick cleaner 10 moves to the dust collecting part 330 through the first flow path, leaving only foreign substances in the dust collecting part 330 and exiting the dust collecting part 330.

The second flow path may connect the robot cleaner 100 and the dust collecting part 330. Dust inside the robot cleaner 100 may be moved to the dust collecting part 330 through the second flow path.

The flow path switching valve may be placed between the dust collecting part 330 and the first flow path and the second flow path. The flow path switching valve may selectively open and close the first flow path and the second flow path connected to the dust collecting part 330. Through this, the reduction in suction power caused by the opening of the plurality of flow paths may be prevented.

Through the multi-station 300, two cleaners 10 and 100 may be docked and charged at the same time, and the dust contained in each cleaner 10 and 100 may be sucked and collected by utilizing one suction motor 360.

Meanwhile, the mobile robot system according to the embodiment of the present disclosure may include a dumping station.

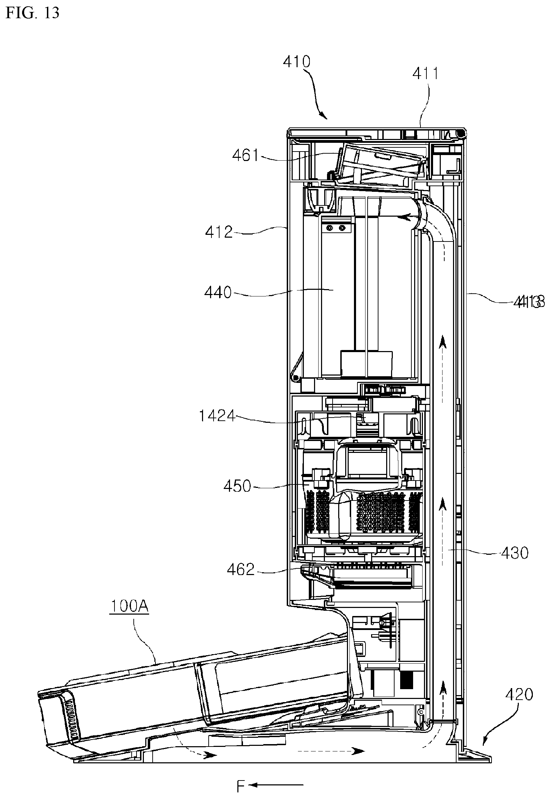

FIG. 12 is a perspective view of a third docking station of the robot cleaner system of FIG. 1, and FIG. 13 is an internal detailed view illustrating movement of dust when the third docking station of FIG. 12 and the robot cleaner are combined.

Referring to FIGS. 12 and 13, the third docking station according to another embodiment of the present disclosure is provided as a dumping station 400 for a robot cleaner.

The dumping station 400 is combined with the robot cleaner 100 and charges the robot cleaner 100, sucks in dust collected in the dust bin of the robot cleaner 100, or safely stores the cleaned cleaner 100.

The dumping station 400 may be distributed and sold together with the robot cleaners 100A and 100B and may be programmed to be compatible with the robot cleaners 100A and 100B and distributed and sold separately. Therefore, the user may additionally purchase the compatible dumping station 400 and install the same within a driving area.

A housing 410 forms the exterior of the cleaner station 400 and forms a space in which components are store therein.

The housing 410 may be formed such that a vertical height is greater than a horizontal width or a front-rear width. By having this arrangement, the space occupied in the room in which the dumping station 400 is installed may be minimized.

The housing 410 may include an upper cover 411 and side covers 412 and 413. The upper cover 411 is disposed on an upper surface of the housing 410. The upper cover 411 may be opened and closed. Specifically, a rear end of the upper cover 411 is hingedly connected to the housing 410 body and rotates upward, thereby opening and closing the upper surface of the housing 410. When the upper cover 411 is opened, a prefilter 461 may be mounted or removed.

A first side cover 412 is placed on the side of the housing 410. Specifically, the first side cover 412 is placed on the left side and the front side of the housing 410.

The first side cover 412 may be opened and closed. Specifically, the rear end of the first side cover 412 is hingedly connected to the housing 410 body and rotates to the left, allowing a dust collecting part 440 to be mounted or removed.

The second side cover 413 is placed on the side of the housing 410. Specifically, the second side cover 413 is placed on the right side and the rear side of the housing 410.

The second side cover 413 covers a dust flow path 430. An inner surface of the second side cover 413 may be provided with a soundproofing material to block noise occurring inside the housing 410 from being emitted to the outside.

The coupling portion 420 is a component to which the robot cleaners 100A and 100B is coupled and which is connected to at least one of the components of the robot cleaners 100A and 100B. The coupling portion 420 is disposed in the housing 410 and includes a coupling surface to which at least a portion of the robot cleaners 100A and 100B is coupled.

The coupling portion 420 covers a lower surface of the housing 410 and may be formed to extend to the front of the housing 410. The coupling portion 420 may form a slope with a low front end and a high rear end. Accordingly, the robot cleaner 100 may move from the front to the rear of the coupling portion 420 and enter the coupling portion 420.

The coupling portion 420 includes a driving wheel mounting portion 421. The driving wheel mounting portion 421 allows the driving wheel of the robot cleaner 100 to be mounted on an upper portion thereof. The driving wheel mounting portion 421 is sunken downward from the coupling surface of the coupling portion 420. The driving wheel mounting portion 421 may be formed as a left and right pair to correspond to the driving wheel.

The coupling portion 420 includes a mop mounting portion 422. The mop mounting portion 422 is placed in a lower portion of the mop of the robot cleaners 100A and 100B when the cleaner 200 is coupled to the cleaner station 400.

The coupling portion 420 includes a caster guide 423. The caster guide 423 is formed on a trace along which the caster of the robot cleaners 100A and 100B passes when the cleaner 200 is coupled to the cleaner station 400. The caster guide 423 is formed in a recess shape that is sunken downward. The caster guide 423 extends in a front-rear direction in which the robot cleaners 100A and 100B enters.

The coupling portion 420 includes a suction port 424. The suction port 424 of the coupling portion 420 is connected to an inlet end of the suction flow path 430. The suction port 424 of the coupling portion 420 is connected to a discharge port of the dust bin of the robot cleaner 100.

The coupling portion 420 includes a charging terminal 425. The charging terminal 425 is disposed at the front end of the coupling portion 420 and protrudes upward. The charging terminal 425 of the coupling portion 420 comes into contact with a charging terminal (not shown) of the cleaner, so that the robot cleaners 100A and 100B and the dumping station 400 are electrically connected.

The dust collecting part 440 is installed inside the housing 410. When the first side cover 412 rotates, the dust collecting part 440 may be mounted or detached.

The dust flow path 430 has an inlet connected to the dust bin (not shown) of the cleaner and an outlet connected to an air inlet of the dust collecting part 440. The dust flow path 430 extends forward inside the coupling part 420.

The dust flow path 430 has an outlet positioned higher than an inlet. The dust flow path 430 extends upward inside the dumping station 400. The outlet of the dust flow path 430 is connected to the air inlet of the dust collecting part 440, so that dust flowing through the dust flow path 430 may flow to the dust collecting part 440.

Inside the dust flow path 430, air rises from the bottom to the top. The inside of the dust flow path 430 is formed as a simple cylindrical structure, so that almost no air resistance occurs therein. Therefore, dust contained in the air may flow to the outlet of the dust flow path 430 without air resistance.

The dust collecting part 440 is a component that collects dust inside the dust bin of the cleaner 100. The dust collecting part 440 according to the present disclosure is a bagless type. The types of dust collecting parts 440 are largely divided into a bag type and a bagless type. The bag type is a method in which a separate bag is provided in the dust collecting part 440, dust is collected in the bag, and only the bag is separated from the dumping station 400 400 and thrown away. In contrast, the bagless type is a method in which a separate bag is not provided in the dust collecting part 440, dust is collected in the dust collecting part 440 itself, and the dust collecting part 440 itself is separated from the dumping station 400 to empty dust.

In general, a certain amount of dust is collected in the robot cleaners 100A and 100B, and the dust collected first in the robot cleaners 100A and 100B flows into the dumping station 400, so that a large amount of dust may flow in at one time. Here, if too much dust flows in at one time into the bagless type dust collecting part 440, the flow path may be blocked, causing a problem in that the dumping station 400 loses its collection function. Accordingly, the dumping station 400 according to the present disclosure is provided with a part for removing dust stuck in the discharge port and compressing the collected dust, thereby securing the collection function of the dumping station 400.

Meanwhile, the housing 410 further includes a dust collecting motor 450. The dust collecting motor 450 generates air flow inside the dumping station 400. The dust collecting motor 450 is placed between the robot cleaners 100A and 100B and the dust collecting part 440 when the robot cleaners 100A and 100B is combined.

The dust collecting motor 450 is placed above the robot cleaners 100A and 100B and below the dust collecting part 440.

The multi-station 300 of FIG. 10 or the dumping station 400 of FIG. 12 may be installed together with or separately from the general station 200 of FIG. 6 within one driving area.

Here, the multi-station 300 and the dumping station 400 may also include docking signal output parts 370 and 470 for inducing docking of the robot cleaner 100.

The docking signal output parts 370 and 470 may be formed similarly to the docking signal output part 270 of the general station 200 illustrated in FIG. 9.

That is, a plurality of output terminals 270R, 270C, and 270L capable of emitting docking signals toward the front may be arranged spaced apart from each other, and a plurality of docking signal output elements are arranged to emit docking signals toward the area allocated to the respective output terminals 270R, 270C, and 270L.

The controller 250 may periodically command the docking signal output part 270 to output a docking signal, while receiving a detection signal regarding whether the robot cleaner 100 is docked.

The docking signal output parts 270, 370, and 470 of the docking stations 200, 300, and 400 include output terminals 270R, 270C, and 270L for outputting a plurality of docking signals to the front as shown in FIGS. 8 and 9.

The output terminals 270R, 270C, and 270L include six infrared output elements arranged in a controlled angle according to the area allocated to each of the output terminals 270R, 270C, and 270L when the docking signal is an infrared (IR) signal, and the six infrared output elements may be defined as one output terminal 270R, 270C, and 270L by forming pairs of two in each direction.

The six output elements may be implemented as elements that output six different signals, and physically, two elements may be paired and arranged as one output terminal 270R, 270C, and 270L depending on the direction in which the docking signal is transmitted.

As an example, as shown in FIG. 8, a right output terminal 270R for generating a signal to the right from the front of the docking stations 200, 300, and 400, a center output terminal 270C for generating a signal to the center, and a left output terminal 270L for generating a signal to the left may be implemented.

Hereinafter, the operation of generating docking signals of the plurality of docking stations 200, 300, and 400 linked with one robot cleaner 100 will be described.

FIG. 14 is a diagram illustrating a docking mode of the robot cleaner 100 and the docking stations 200, 300, and 400 in one driving area, FIG. 15A illustrates a signal range of a plurality of docking signals transmitted from specific docking stations 200, 300, and 400, FIG. 15B illustrates a left docking signal range in FIG. 15A, FIG. 15C illustrates a center docking signal range in FIG. 15A, and FIG. 15D illustrates a right docking signal range in FIG. 15A.

Such a docking signal may be transmitted as an infrared signal, i.e., an IR signal.

That is, the controller 250 of the docking stations 200, 300, and 400 may control the docking signal output part 270 to control and output the docking IR signal to each output terminal.

The docking IR signal output part 270 includes a plurality of output elements, for example, a plurality of infrared output elements, as output terminals 270R, 270C, and 270L that are exposed to the body 210 to emit IR signals to the outside.

Here, the plurality of infrared output elements may output different signals depending on the type of the docking stations 200, 300, and 400, and may transmit information on the type of the docking stations 200, 300, and 400 and the location of the corresponding robot cleaner 100 by performing different time divisions depending on the respective allocated areas.

To this end, the plurality of infrared output elements emitting different light may be arranged in a matrix form vertically and horizontally as shown in FIG. 8, and a plurality of infrared output elements arranged in the same column may be defined as one output terminal 270R, 270C, and 270L to transmit docking IR signals in the same direction.

The area of the robot cleaner 100 defined by the signal transmitted by each infrared output element is as shown in FIGS. 15A to 15D below.

An area 600 in which a plurality of signals overlap may be formed in front of the docking stations 200, 300, and 400.

In an example, the plurality of signals transmitted from the docking stations 200, 300, and 400 may be infrared signals, and an infrared sensor (not shown) included in the sensing part 130 of the robot cleaner 100 may detect the plurality of signals.

FIG. 15B illustrates the emission state of the left output terminal 270L including a left infrared output element, in which the entire emission area 601a and a concentrated emission area 601b of the left docking signal may be formed.

Specifically, the left docking signal may include a first short-range signal and a first long-range signal. That is, the docking station 200 may include an infrared output element emitting each of the first short-range signal and the first long-range signal in the left output terminal 270L. Accordingly, the area to which both the first short-range signal and the first long-range signal are transmitted may correspond to the concentrated emission area 601b, and the area to which the first long-range signal is transmitted may correspond to the entire emission area 601a.

Similarly, referring to FIG. 15C and FIG. 15D, the emission states of the center docking signal and the right docking signal are illustrated.

The entire emission area 602a and the concentrated emission area 602b of the center docking signal may be formed, and the entire emission area 603a and the concentrated emission area 603b of the right docking signal may be formed. In addition, the center docking signal may include a second short-range signal and a second long-range signal, and the right docking signal may include a third short-range signal and a third long-range signal.

Here, the center infrared output terminal 270C may include a slit, and the center docking signal may be emitted to a narrower area than the left or right docking signal by the slit.

In addition, referring to FIG. 15A, the area 600 in which the first to third signals overlap may be formed. Since the area 600 in which a plurality of signals overlap is formed in front of the docking stations 200, 300, and 400, the controller 140 of the robot cleaner 100 according to the present disclosure may dock the cleaner 100 and the docking stations 200, 300, and 400 by simply moving the body 110 straight when it is determined that the body 110 of the cleaner 100 is located in the overlapping area 600 and the front of the body faces the docking stations 200, 300, and 400.

Meanwhile, when it is detected that a left docking signal emitted to the front of the docking stations 200, 300, and 400, the controller may determine that the body 110 is located in front of the docking stations 200, 300, and 400, enable the front of the body to face the docking station 200, and move the body 110 straight to dock the cleaner and the docking station.

Here, the mobile robot system according to the first embodiment of the present disclosure includes heterogeneous docking stations 200, 300, and 400 as applicable docking stations 200, 300, and 400 and transmits unique docking signals to the respective docking stations 200, 300, and 400.

FIG. 16A illustrates a docking signal of a general docking station, FIG. 16B illustrates a docking signal of a multi-docking station, and FIG. 16C illustrates a docking signal of a dumping docking station.

Referring to FIGS. 16A to 16C, the controller commands the respective docking stations 200, 300, and 400 to output a docking signal to the docking signal output part 270 to have digital information corresponding to an upper table.

The docking stations 200, 300, and 400 outputs the docking signal according to a predetermined cycle.

Here, a section in which the docking signal is output in one cycle is referred to as an active section, and the other sections are defined as idle sections.

Each docking stations 200, 300, and 400 outputs the docking signal in one cycle and repeatedly outputs the same docking signal again at the active time in the next cycle, thereby continuously transmitting the docking signal to the robot cleaner 100 moving around.

**In** the case of the general station 200 of FIG. 16A, four bits are allocated to each infrared output element between a header area and an end area in the active section of one cycle.

Here, in the case of the general station 200, a first bit of each of the four bits may be allocated to have 1.

That is, the unique digital signal of the general station 200 may be allocated as 1000.

Such a unique digital signal is time-divided according to each docking infrared output element within the active section, and each docking infrared output element converts the unique digital signal value allocated to the allocated time into analog and emits the same as shown in the lower graph.

Therefore, unique digital signals are transmitted in order of the left far infrared output element, left near infrared output element, center far infrared output element, center near infrared output element, right far infrared output element, and right near infrared output element between the header area and the end area, and a dummy section may be placed between the signals of each far infrared output element and each near infrared output element to prevent overlapping.

The signal of each dummy section may be repeatedly transmitted by the near infrared output element that transmits the subsequent docking signal as a unique digital signal, but is not limited thereto, and the far infrared output element that transmits the previous docking signal may also repeatedly transmit the unique digital signal.

Therefore, when signals of all areas are received in the overlapping area 600, an analog signal corresponding to the unique digital signal 1000, which is regularly repeated between the header area and the end area, like the lower **IR** sum signal, may be repeatedly received.

Meanwhile, in the case of the multi-station 300, as shown in FIG. 16B, the unique digital signal may be assigned as 0010.

Such unique digital signals are time-divided between the header area and the end area, and each docking infrared output element converts the digital signal value assigned to the corresponding time into analog and transmits the same as shown in the graph.

Therefore, the unique digital signals are transmitted in order of the left far infrared output element, the left near infrared output element, the center far infrared output element, the center near infrared output element, the right far infrared output element, and the right near infrared output element, and a dummy section is provided between the signals of each far and near infrared output element to prevent overlapping. The signal of each dummy section may be repeatedly transmitted by the near infrared output element that transmits thereafter, but is not limited thereto.

Therefore, when all the signals of the areas are received in the overlapping area, an analog signal corresponding to 0010 may be regularly repeated between the header and the end, like the lower **IR** sum signal.

Meanwhile, in the case of the dumping station 400, the unique digital signal may be assigned as 0100, as shown in FIG. 16C.

The unique digital signal is time-divided between the header area and the end area, and each docking infrared output element converts the digital signal value assigned at the corresponding time into analog and transmits the same as shown in the graph.

Therefore, the unique digital signal is transmitted in order of the left far infrared output element, the left near infrared output element, the center far infrared output element, the center near infrared output element, the right far infrared output element, and the right near infrared output element, and a dummy section may be placed between the signals of each far and near infrared output element to prevent overlapping. The signal of each dummy section may be repeatedly transmitted by the near infrared output element that transmits the same thereafter, but is not limited thereto.

Therefore, when all the signals of the areas are received in the overlapping area, an analog signal corresponding to 0100 may be regularly repeated between the header and the end, such as the IR sum signal below.

As shown in FIGS. 16A to 16C, each of the docking stations 200, 300, and 400 compatible with the robot cleaner 100 that may be installed in the mobile robot system is assigned a unique digital signal value and may emit the same as a docking signal.

Therefore, even if any docking stations 200, 300, and 400 are installed in the driving area, the robot cleaner 100 may determine what type of docking stations 200, 300, and 400 it is by converting the digital signal value of the docking signal of the corresponding docking stations 200, 300, and 400.

Here, the robot cleaner 100 may further filter out noise by determining only when respective digits of the received unique digital signal, for example, all 4 bits in the case of a 4-bit digital signal, match, as a valid unique digital signal.

For example, in the case of the general station 200, only the value 1000 is determined as the general station 200, and a signal that has a valid value in the first digit, such as 1010, but also has a valid value in other digits is filtered as noise. Therefore, the reliability of the determination of the unique digital signal may be further improved by including both the position of the value 1 and the position of the value 0 as factors.

Accordingly, when the robot cleaner 100 determines the type of the docking stations 200, 300, and 400 from the docking signal, the robot cleaner 100 may drive by varying the docking mode according to the type of the corresponding docking stations 200, 300, and 400.

Hereinafter, a method for controlling the robot cleaner 100 in a case in which heterogeneous docking stations 200, 300, and 400 are arranged in one driving area will be described with reference to FIGS. 17 and 18.

FIG. 17 illustrates a state in which multiple heterogeneous docking stations are arranged in a space, FIG. 18 is a flowchart illustrating a docking mode of the robot cleaner 100 in FIG. 17, and FIG. 19 illustrates docking search of FIG. 18.

The mobile robot system according to an embodiment of the present disclosure has heterogeneous docking stations 200, 300, and 400 arranged in one driving space 500.

For example, this corresponds to a case in which the general station 200 distributed together with one robot cleaner 100 is placed in the driving space 500 and the multi-station 300 is additionally purchased/placed.

Another example is when the general station 200 distributed together with one robot cleaner 100 is placed in the corresponding driving space 500, and the dumping station 400 for dumping dust is additionally purchased/placed.

**In** this manner, when additional docking stations 200, 300, and 400 are placed, the existing general station 200 may be removed, but if the driving space 500 is wide, multiple docking stations 200, 300, and 400 may be arranged in one driving space.

Here, information on the unique digital signals of the additional docking stations 200, 300, and 400 in the system is stored in a control program of the robot cleaner 100, and is updated periodically by the server, thereby enabling the update of the unique digital signals for the docking stations 200, 300, and 400 being developed.

**In** a case in which two docking stations are arranged in one driving area 500 as shown in FIG. 17, the robot cleaner 100 starts from one of the docking stations 200, 300, and 400 and proceeds with cleaning the driving area (S10).

Here, the cleaning and driving of the driving area 500 may be performed in a zigzag manner as shown in FIG. 17, but is not limited thereto.

When the cleaning of the driving area 500 is completed or when docking is required due to the battery remaining capacity which is below a predetermined range, the robot cleaner 100 moves to the vicinity of the corresponding docking station 200 from which cleaning was started.

That is, when cleaning starts from the general station 200, the robot cleaner 100 moves to the vicinity of the general station 200, and when cleaning starts from the multi-station 300, the robot cleaner 100 moves to the vicinity of the multi-station 300 (S20).

Here, the robot cleaner 100 may be set to move not to the closest distance of the docking station 200 from which the robot cleaner 100 started cleaning, but within a predetermined distance, for example, to a point at which a far docking signal is received.

When the robot cleaner 100 moves to a far boundary position of the docking station, the robot cleaner 100 starts a docking search operation (S30).

**In** order to search for the docking stations 200 and 300, the robot cleaner 100 rotates 360 degrees at the corresponding point, i.e., the far boundary position, as shown in FIG. 19, and receives whether there is a docking infrared signal received.

That is, the robot cleaner 100 receives all docking signals from multiple docking stations 200 and 300 that may be received at the corresponding location (S40).

Here, since each of the docking stations 200 and 300 transmits a docking signal in the same cycle, when a docking signal is received from the first docking station in the first cycle, the robot cleaner 100 may operate by receiving a docking signal from the second docking station 300 in the second cycle.

Therefore, the robot cleaner 100 may receive docking signals from different docking stations 200 and 300 alternately in each cycle without signal interference.

The robot cleaner 100 digitizes the docking signal received in each cycle and extracts a unique digital signal.

If two unique digital signal extracted by the robot cleaner 100 are determined as 1000, 0010, it is determined that two docking stations 200 and 300 corresponding to the unique digital signal are placed in the driving area.

The robot cleaner 100 determines whether there is priority for the two docking stations 200 and 300 (S50).

The priority is defined such that, when the multiple docking stations 200 and 300 exist, the docking stations 200 and 300 that perform docking first are determined with respect to the other docking stations 200 and 300.

For example, if the general station 200 and the multi-station 300 exist, priority may be set for the multi-station 300, and if the general station 200 and the dumping station 400 exist, priority may be set for the dumping station 400.

In this case, if the priority is set, it is determined whether the docking stations 200 and 300 with the set priority exist within the driving area 500.

If the docking stations 200 and 300 with the set priority exist within the driving area 500, the robot cleaner 100 moves toward the corresponding docking stations 200 and 300 and performs docking (S60).

Here, docking may be performed by additionally receiving a docking signal from the corresponding docking stations 200 and 300 so that the current robot cleaner 100 may drive while detecting the location of the docking stations 200 and 300.

That is, if the received docking digital signal is a right docking signal, the robot cleaner 100 may attempt docking while driving to the left.

Meanwhile, if the docking stations 200 and 300 with the set priority do not exist within the driving area, the robot cleaner 100 may perform docking to the first docking station 200 from which it started driving, and perform docking with the corresponding docking station 200 to start charging (S70).

Meanwhile, the mobile robot system according to another embodiment of the present disclosure may have heterogeneous docking stations 200 and 300 arranged within a continuous driving area 500 as shown in FIG. 19.

FIG. 20 illustrates a state in which multiple heterogeneous docking stations are arranged in two adjacent spaces, and FIG. 21 is a flowchart illustrating a docking mode of the robot cleaner 100 in FIG. 20.

In the mobile robot system according to another embodiment of the present disclosure, in a state in which a first docking station 200 is placed in one driving space 510, second docking stations 300 and 400 of different types from the first docking station 200 are arranged in another driving space 520 adjacent to one driving space 510.

For example, it corresponds to a case in which, in a state in which the general station 200 distributed and sold together with one robot cleaner 100 is placed in the first driving space 510, the multi-station 300 is additionally purchased and placed in the second driving space 520 from which the robot cleaner 100 may move to the first driving space 510 and a door, etc.

As another example, it corresponds to a case in which, in a state in which the general station 200 distributed and sold together with one robot cleaner 100 is placed in the first driving space 510, the dumping station 400 for dumping dust is additionally purchased and placed in the second driving space 520 from which the robot cleaner 100 may move through the first driving space 510 and a door, etc., and may continuously drive.

**In** this case, when additional docking stations 200 and 300 are placed in different continuous driving spaces, the first driving space 510 and the second driving space 520 may be difficult to receive docking signals from the docking stations 200 and 300 other than the docking stations in which they are placed.

Here, information on the unique digital signal of the additional docking stations 200 and 300 in the system may be stored in the control program of the robot cleaner 100, and the unique digital signal for the developed docking station may be periodically updated by the server to be updated.

**In** a case in which two docking stations 200 and 300 are respectively arranged in two consecutive driving areas 510 and 520 as shown in FIG. 20, the robot cleaner 100 starts from the first docking station 200 of the first driving area 510 and proceeds with cleaning of the first driving area 510 (S110).

Here, the cleaning and driving of the driving area may be performed in a zigzag manner as shown in FIG. 20, but is not limited thereto. When the driving and cleaning of the first driving area 510 is completed, the robot cleaner 100 moves to the neighboring second driving area 520 through a connecting passage, such as a door, and continues driving and cleaning of the second driving area 520.

Here, when the driving and cleaning up to the continuous second driving area 520 is completed or when the remaining battery capacity is below a predetermined range and docking is required, the robot cleaner 100 moves to the vicinity of the first docking station 200 in which cleaning was started (S120).

That is, when cleaning starts from the general station 200, the robot cleaner 100 moves to the vicinity of the general station 200, and when cleaning starts from the multi-station 300, the robot cleaner 100 moves to the vicinity of the multi-station 300.

Here, the robot cleaner 100 may be set to move within a predetermined distance, for example, to a far boundary area, rather than moving to the closest distance of the first docking station 200.

The robot cleaner 100 moves to the far boundary area of the first docking station 200 and the robot cleaner 100 starts a docking search operation (S130).

The docking search operation is defined as receiving all receivable docking signals while rotating 360 degrees at the corresponding location as shown in FIG. 19.

Here, since each of the docking stations 200 and 300 transmits a docking signal in the same cycle, when a docking signal is received from the first docking station in the first cycle, the robot cleaner 100 may operate by receiving a docking signal from the second docking station 300 in the second cycle.

Therefore, the robot cleaner 100 may receive docking signals from different docking stations 200 and 300 alternately in each cycle without signal interference.

The robot cleaner 100 digitizes the docking signal received in each cycle and extracts a unique digital signal.

If the unique digital signals of the docking signals received by the robot cleaner 100 for a plurality of cycles are all the same, the robot cleaner 100 determines that the docking signals are received from only one of docking stations 200 and 300 and starts docking to the corresponding docking stations 200 and 300 (S140).

Here, docking is performed by additionally receiving a docking signal from the corresponding docking stations 200 and 300 so that the current robot cleaner 100 may drive while detecting the location of the docking stations 200 and 300 (S150). That is, if the received docking digital signal is a right docking signal, the robot cleaner 100 may attempt docking while driving to the right.

Meanwhile, If two unique digital signal extracted by the robot cleaner 100 are determined as 1000, 0010, it is determined that two docking stations 200 and 300 corresponding to the unique digital signal are placed in the driving area (S160). The robot cleaner 100 determines whether there is priority for the two docking stations 200 and 300.

In this case, if the priority is set, it is determined whether the docking stations 200 and 300 with the set priority exist within the current driving areas 510 and 520.

If the docking stations 200 and 300 with the set priority exist within the driving area 500, the robot cleaner 100 moves toward the corresponding docking stations 200 and 300 and performs docking (S170).

If the docking stations 200 and 300 with the set priority exist within the current driving area 510 and the neighboring driving area 520, the robot cleaner 100 passes through the movement passage and enters the corresponding driving area. If the docking station 300 with the set priority exists within the neighboring driving area 520 that the robot cleaner 100 has entered, the robot cleaner 100 moves toward the corresponding docking station 300 and performs docking.

Meanwhile, if the docking station 300 with the set priority do not exist within the driving area 510, the robot cleaner 100 may perform docking to the first docking station 200 from which it started driving, and perform docking to the first docking station 200 to start charging.

In this manner, even if multiple heterogeneous docking stations 200 and 300 are arranged in a space, since docking signals including respective unique digital signals are transmitted to the respective docking stations 200 and 300, the robot cleaner 100 may enter the docking mode according to the respective docking stations 200 and 300.

For example, in the case of the general station 200, when the driving front of the robot cleaner 100 and the front of the general station 200 are identical, forward driving in which the front of the robot cleaner 100 is driven toward the front of the general station 200 may be performed as a docking mode. Alternatively, in the case of the multi-station 300 or the dumping station 400, as a docking mode, the dust bin opening may be performed for the flow of dust from the dust bin 120, and to this end, if the driving front of the robot cleaner 100 and the front of the multi-station 300 or the dumping station 400 are aligned, the rear of the robot cleaner 100, i.e., the side in which the dust bin is located, may be rotated to drive toward the front of the general station 200 to perform rear docking additionally.

In addition, by setting priority for an additionally purchased and installed docking station, it is possible to reduce long-range driving for docking by utilizing the docking station including additional functions and also utilizing the already placed general station 200.

## Claims

1. A robot cleaner comprising:
a body;
a driving part moving the body;
a battery supplying power to the driving part;
a sensor part receiving a docking signal from at least one docking station for charging the battery; and
a controller determining a type of the docking station from the docking signal detected by the sensor part, determining a docking mode according to the type of the docking station, and controlling the driving part to dock to the docking station.

2. The robot cleaner of claim **1,** wherein the controller extracts information indicating the type of the docking station from the docking signal when at least one docking station is of a different type.

3. The robot cleaner of claim 2, wherein the controller includes docking station information indicating a type allocated to a plurality of heterogeneous docking stations.

4. The robot cleaner of claim 3, wherein, when the driving for docking starts, the controller controls the driving part to move toward a docking station which has started driving.

5. The robot cleaner of claim 4, wherein the controller moves toward the docking station which has started driving and performs a docking detection operation at a first position to read all of the received docking signals.

6. The robot cleaner of claim 5, wherein the controller rotates 360 degrees from the first position and reads all of the docking signals when performing the docking detection operation.

7. The robot cleaner of claim 6, wherein, when receiving all of the docking signals from at least two heterogeneous docking stations placed within a driving area, the controller determines whether there is a docking station with a set priority among the docking signals.

8. The robot cleaner of claim 7, wherein the controller controls the driving part to perform docking to the docking station to which the priority is set.

9. The robot cleaner of claim 5, wherein the controller determines that the docking station is placed when the received docking signal matches all of stored assigned docking station information of the docking station.

10. The robot cleaner of claim 9, wherein, when the docking station to which docking is to be performed is a general station, the controller determines the docking mode to be forward driving, and when the docking station to which docking is to be performed is a multi-station or a dumping station, the controller determines the docking mode so that the robot cleaner drives backward to perform docking.

11. A method of controlling a robot cleaner, the method comprising:
receiving docking station information for heterogeneous docking stations;
driving in a driving area from a first docking station of the driving area and performing cleaning;
driving toward the first docking station when docking is required;
performing docking search at a first location and receiving all docking signals;
comparing the docking signals with the docking station information to determine the docking station to dock at; and
moving to a determined docking station and performing docking.

12. The method of claim 11, wherein, when heterogeneous docking stations are placed within the driving area, assigned unique docking signals are received from the heterogeneous docking stations in the docking search operation.

13. The method of claim 12, wherein the docking station information includes information indicating types of multiple heterogeneous the docking stations.

14. The method of claim 13, wherein, in the docking search operation, the docking signals are received while rotating 360 degrees at the first position.

15. The method of claim 14, further comprising:
when receiving all of the docking signals from at least two heterogeneous docking stations arranged within the driving area, determining whether there is a docking station with a set priority among the docking signals; and
when there is a docking station with a set priority, performing docking to the docking station with the set priority.

16. The method of claim 15, wherein,
in the performing of the docking, when the docking station to dock at is a general station, the robot cleaner drives with a front of the robot cleaner facing a front of the general station to dock by forward driving, and
when the docking station to dock at is a multi-station or a dumping station, the robot cleaner rotates so that a rear of the robot cleaner faces a front of the docking station to dock by backward driving.

17. The method of claim 11, wherein, in the determining of the docking station, when all of the received docking signals match the docking station information, it is determined that a matched docking station is located.

18. A robot cleaner system comprising:
at least one docking station among multiple heterogeneous docking station groups placed within a driving area and have different docking signals assigned according to their types; and
a robot cleaner receiving the docking signal from the docking station and attempts to dock,
wherein the robot cleaner includes:
a body;
a driving part moving the body;
a battery supplying power to the driving part; and
a sensor part receiving a docking signal from at least one docking station for charging the battery,
wherein the robot cleaner, when docking is required, determines the type of the docking station from the docking signal detected by the sensor part, determines a docking mode according to the type of the docking station, and dock to the docking station.

19. The robot cleaner system of claim 18, wherein each of the at least one docking station is assigned a unique docking signal representing its type, and information on the unique docking signal is shared with the robot cleaner.

20. The robot cleaner system of claim 19, wherein the unique docking signal is assigned as a digital signal of a predetermined bit, and if all the digital signals of the predetermined bit match, the robot cleaner determines that the corresponding type of the docking station is placed.
